# EUROPEAN PATENT APPLICATION

(11) **EP 4 586 650 A1**
(43) Date of publication of application: **16.07.2025**
(21) Application number: 23870556.0
(22) Date of filing: 21.09.2023
(51) Int. Cl.: H04W 4/02

(54) **COMMUNICATION METHOD AND COMMUNICATION APPARATUS**

(30) Priority: 29.09.2022 CN 202211203454
(71) Applicant: Huawei Technologies Co., Ltd., Shenzhen, Guangdong 518129 (CN)
(72) Inventor: GUO, Longhua, Shenzhen, Guangdong 518129 (CN); WU, Rong, Shenzhen, Guangdong 518129 (CN)
(74) Representative: Körber, Martin Hans
(86) International application number: PCT/CN2023/120244
(87) International publication number: WO 2024/067324

(57) **Abstract**

A communication method is provided and includes: A first terminal device sends a first request message to a second terminal device, where the first request message is used to request to obtain a distance and/or an angle between the first terminal device and the second terminal device, the first request message includes first information, and the first information is used by the second terminal device to determine whether to agree to obtain the distance and/or the angle between the first terminal device and the second terminal device; and the first terminal device receives a first response message from the second terminal device, where the first response message includes first indication information, and the first indication information indicates a determining result of whether the second terminal device agrees to obtain the distance and/or the angle between the first terminal device and the second terminal device. The first information is carried in the request message, so that the second terminal device can determine, based on the first information, whether to agree to perform measurement, to avoid information leakage of the second terminal device that is caused by obtaining a measurement result without consent of the second terminal device.

## Description

This application claims priority to Chinese Patent Application No. 202211203454.X, filed with the China National Intellectual Property Administration on September 29, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

A sidelink ranging (sidelink Ranging) service is used to calculate an angle and/or a distance between two UEs. For example, a first terminal device in the first terminal device (a reference terminal device) and a second terminal device (a target terminal device) that participate in a sidelink ranging service receives a ranging service request from a first device (for example, a core network function network element (network function, NF), an application server (application function, AF), or a third terminal device), where the ranging service request is used to request to measure and calculate a distance and/or an angle between the first terminal device and the second terminal device.

Currently, in a sidelink ranging service procedure in a 5th generation (5th generation, 5G) communication system, a reference terminal device may obtain a ranging result between the reference terminal device and a target terminal device, and the reference terminal device may send the ranging result to a first device without obtaining consent of the target terminal device, causing information leakage of the target terminal device. Therefore, how to avoid obtaining a ranging result without consent of a target terminal device becomes an urgent problem to be resolved.

### SUMMARY

Embodiments of this application provide a communication method, to avoid obtaining a ranging result without consent of a target terminal device.

According to a first aspect, a communication method is provided. The method may be performed by a first terminal device, or may be performed by a component (for example, a chip or a circuit) of the first terminal device. This is not limited. For ease of description, the following uses an example in which the method is performed by the first terminal device for description.

The communication method includes: The first terminal device sends a first request message to a second terminal device, where the first request message is used to request to obtain a distance and/or an angle between the first terminal device and the second terminal device, the first request message includes first information, and the first information is used by the second terminal device to determine whether to agree to obtain the distance and/or the angle between the first terminal device and the second terminal device; and the first terminal device receives a first response message from the second terminal device, where the first response message includes first indication information, the first indication information indicates a determining result of the second terminal device, and the determining result includes whether obtaining of the distance and/or the angle between the first terminal device and the second terminal device is agreed on.

Based on the foregoing technical solution, the first terminal device participating in a sidelink measurement service (for example, a sidelink ranging service) includes the first information in the first request message that is sent to the second terminal device and that requests to perform measurement, so that the second terminal device can determine, based on the first information, whether to agree on the measurement, to avoid information leakage of the second terminal device that is caused by obtaining a measurement result by performing the measurement without consent of the second terminal device. In other words, in the foregoing solution, the measurement result obtained in a measurement process is agreed on by the second terminal device, to avoid obtaining the measurement result without consent of the second terminal device.

With reference to the first aspect, in some implementations of the first aspect, before that the first terminal device sends a first request message to a second terminal device, the method further includes: The first terminal device receives a second request message from a first device, where the second request message is used to request to measure the distance and/or the angle between the first terminal device and the second terminal device, and the second request message includes the first information.

Based on the foregoing technical solution, when the measurement request is initiated by the first device, the second request message that is received by the first terminal device and that requests the measurement carries the first information, so that the first terminal device obtains and forwards the first information to the second terminal device. In this way, the second terminal device can determine, based on the first information, whether to agree on the measurement, to avoid information leakage of the second terminal device that is caused by obtaining the measurement result by performing the measurement without consent of the second terminal device.

With reference to the first aspect, in some implementations of the first aspect, the first information includes an identifier of the first device and/or purpose information indicating a measurement result use purpose.

Based on the foregoing technical solution, a specific form of the first information may be the identifier of the first device, or may be information such as the purpose information indicating the measurement result use purpose. A specific form of the first information is not limited, so that flexibility of the solution is improved.

With reference to the first aspect, in some implementations of the first aspect, when the determining result is that the second terminal device disagrees to obtain the distance and/or the angle between the first terminal device and the second terminal device, the first response message further includes a cause value, and the cause value indicates a cause why the second terminal device disagrees to obtain the distance and/or the angle between the first terminal device and the second terminal device.

Based on the foregoing technical solution, when the second terminal device determines to disagree on the measurement, the second terminal device may further notify, by using the cause value, the cause why the second terminal device disagrees on the measurement, so that the first terminal device learns of the cause why the second terminal device disagrees on the measurement.

With reference to the first aspect, in some implementations of the first aspect, the cause value indicates that the second terminal device disagrees to send a measurement result to the first device, and/or the cause value indicates that the second terminal device disagrees on the measurement result use purpose.

With reference to the first aspect, in some implementations of the first aspect, when the determining result is that the second terminal device agrees to obtain the distance and/or the angle between the first terminal device and the second terminal device, the first response message further includes second indication information, and the second indication information indicates that a measurement result calculating device is the first terminal device or the second terminal device; and the method further includes: The first terminal device determines, according to a privacy protection policy of the first terminal device, whether to agree on content indicated by the second indication information.

Based on the foregoing technical solution, when agreeing on the measurement, the second terminal device may indicate, by using the second indication information, the measurement result calculating device that is expected by the second terminal device. After receiving the second indication information, the first terminal device may determine, according to the local privacy protection policy, whether to agree to the content indicated by the second indication information, to prevent the second terminal device from determining, without consent of the first terminal device, the measurement result calculating device.

With reference to the first aspect, in some implementations of the first aspect, when the second indication information indicates that the second terminal device is the measurement result calculating device, that the first terminal device determines, according to a privacy protection policy of the first terminal device, whether to agree on content indicated by the second indication information includes: When the privacy protection policy of the first terminal device is that the second terminal device is allowed to obtain a measurement result, the first terminal device determines to agree that the second terminal device is used as the measurement result calculating device; or when the privacy protection policy of the first terminal device is that the second terminal device is not allowed to obtain a measurement result, the first terminal device determines to disagree that the second terminal device is used as the measurement result calculating device.

With reference to the first aspect, in some implementations of the first aspect, the second indication information includes role information indicating a measurement role of the second terminal device.

Based on the foregoing technical solution, the second indication information may be the role information indicating the measurement role of the second terminal device. In other words, the second indication information may indirectly indicate, by indicating the measurement role of the second terminal device, the measurement result calculating device. In this technical solution, the second indication information may directly or indirectly indicate the measurement result calculating device, to improve the flexibility of the solution.

With reference to the first aspect, in some implementations of the first aspect, when the role information indicates that the second terminal device is a reference terminal device, that the first terminal device determines, according to a privacy protection policy of the first terminal device, whether to agree on content indicated by the second indication information includes: When the privacy protection policy of the first terminal device is that the second terminal device is allowed to obtain a measurement result, the first terminal device determines to agree that the second terminal device is used as the reference terminal device; or when the privacy protection policy of the first terminal device is that the second terminal device is not allowed to obtain a measurement result, the first terminal device determines to disagree that the second terminal device is used as the reference terminal device.

With reference to the first aspect, in some implementations of the first aspect, the method further includes: The first terminal device sends second information to the second terminal device, where the second information indicates whether the content indicated by the second indication information is agreed on.

With reference to the first aspect, in some implementations of the first aspect, when the first terminal device obtains a measurement result by performing measurement, the first terminal device determines not to send the measurement result to the second terminal device; and the method further includes: The first terminal device sends a second response message to the first device, where the second response message includes the measurement result.

With reference to the first aspect, in some implementations of the first aspect, when the second terminal device obtains a measurement result by performing measurement, the method further includes: The first terminal device receives third indication information from the second terminal device, where the third indication information indicates that the measurement result is successfully sent or fails to be sent; and the first terminal device sends a second response message to the first device, where the second response message includes fourth indication information, and the fourth indication information indicates that the measurement succeeds or fails.

According to a second aspect, a communication method is provided. The method may be performed by a second terminal device, or may be performed by a component (for example, a chip or a circuit) of the second terminal device. This is not limited. For ease of description, the following uses an example in which the method is performed by the second terminal device for description.

The communication method includes: The second terminal device receives a first request message from a first terminal device, where the first request message is used to request to obtain a distance and/or an angle between the first terminal device and the second terminal device, and the first request message includes first information; the second terminal device determines, based on the first information, whether to agree to obtain the distance and/or the angle between the first terminal device and the second terminal device; and the second terminal device sends a first response message to the first terminal device, where the first response message includes first indication information, the first indication information indicates a determining result of the second terminal device, and the determining result includes whether obtaining of the distance and/or the angle between the first terminal device and the second terminal device is agreed on.

With reference to the second aspect, in some implementations of the second aspect, the first information includes an identifier of a first device and/or purpose information indicating a measurement result use purpose.

With reference to the second aspect, in some implementations of the second aspect, when the first information includes the identifier of the first device, that the second terminal device determines, based on the first information, whether to agree to obtain the distance and/or the angle between the first terminal device and the second terminal device includes: The second terminal device determines, based on the identifier of the first device and a local policy, whether to agree to obtain the distance and/or the angle between the first terminal device and the second terminal device; and if the local policy indicates that a measurement result is allowed to be sent to the first device, the second terminal device agrees to obtain the distance and/or the angle between the first terminal device and the second terminal device; or if the local policy indicates that a measurement result is not allowed to be sent to the first device, the second terminal device disagrees to obtain the distance and/or the angle between the first terminal device and the second terminal device.

With reference to the second aspect, in some implementations of the second aspect, when the first information includes the purpose information, that the second terminal device determines, based on the first information, whether to agree to obtain the distance and/or the angle between the first terminal device and the second terminal device includes: The second terminal device determines, based on the purpose information and a local policy, whether to agree to obtain the distance and/or the angle between the first terminal device and the second terminal device; and if the local policy indicates that a measurement result is allowed to be used for the measurement result use purpose indicated by the purpose information, the second terminal device agrees to obtain the distance and/or the angle between the first terminal device and the second terminal device; or if the local policy indicates that a measurement result is not allowed to be used for the measurement result use purpose indicated by the purpose information, the second terminal device disagrees to obtain the distance and/or the angle between the first terminal device and the second terminal device.

With reference to the second aspect, in some implementations of the second aspect, when the second terminal device agrees to obtain the distance and/or the angle between the first terminal device and the second terminal device, the method further includes: The second terminal device determines second indication information according to a privacy protection policy of the second terminal device, where the second indication information indicates that a measurement result calculating device is the first terminal device or the second terminal device; and the first response message further includes the second indication information.

With reference to the second aspect, in some implementations of the second aspect, when the privacy protection policy of the second terminal device is that the first terminal device is allowed to obtain a measurement result, the second indication information indicates that the measurement result calculating device is the first terminal device; or when the privacy protection policy of the second terminal device is that the first terminal device is not allowed to obtain a measurement result, the second indication information indicates that the measurement result calculating device is the second terminal device.

With reference to the second aspect, in some implementations of the second aspect, the second indication information includes role information indicating a measurement role of the second terminal device.

With reference to the second aspect, in some implementations of the second aspect, when the privacy protection policy of the second terminal device is that the first terminal device is allowed to obtain a measurement result, the role information indicates that the measurement role of the second terminal device is a reference terminal device or a target terminal device; or when the privacy protection policy of the second terminal device is that the first terminal device is not allowed to obtain a measurement result, the role information indicates that the measurement role of the second terminal device is a reference terminal device.

With reference to the second aspect, in some implementations of the second aspect, the method further includes: The second terminal device receives second information from the first terminal device, where the second information indicates whether the first terminal device accepts content indicated by the second indication information.

With reference to the second aspect, in some implementations of the second aspect, when the second terminal device obtains a measurement result by performing measurement, the second terminal device determines not to send the measurement result to the first terminal device; and the method further includes: The second terminal device sends the measurement result or an encrypted measurement result to the first device, where the encrypted measurement result is encrypted based on a first key, and the first key is a key shared by the second terminal device and the first device.

With reference to the second aspect, in some implementations of the second aspect, before that the second terminal device sends the measurement result, the method further includes: The second terminal device sends a first request message to the first device, where the first request message is used to request to establish a secure connection, and the secure connection is used to transmit the measurement result.

With reference to the second aspect, in some implementations of the second aspect, before that the second terminal device sends an encrypted measurement result, the method further includes: The second terminal device obtains the first key.

With reference to the second aspect, in some implementations of the second aspect, when the second terminal device disagrees to obtain the distance and/or the angle between the first terminal device and the second terminal device, the first response message further includes a cause value, and the cause value indicates a cause why the second terminal device disagrees to obtain the distance and/or the angle between the first terminal device and the second terminal device.

With reference to the second aspect, in some implementations of the second aspect, the cause value indicates that the second terminal device disagrees to send a measurement result to the first device, and/or the cause value indicates that the second terminal device disagrees on the measurement result use purpose.

For beneficial effects of the method shown in the second aspect and the possible designs of the second aspect, refer to the beneficial effects in the first aspect and the possible designs of the first aspect.

According to a third aspect, a communication method is provided. The method may be performed by a first device, or may be performed by a component (for example, a chip or a circuit) of the first device. This is not limited herein. For ease of description, the following uses an example in which the method is performed by the first device for description.

The communication method includes: A first device sends a second request message to a first terminal device, where the second request message is used to request to measure a distance and/or an angle between the first terminal device and a second terminal device, the second request message includes first information, and the first information is used by the second terminal device to determine whether to agree on the measurement requested by using the second request message; and the first device receives at least one of the following information: a measurement result, an encrypted measurement result, or fourth indication information, where the fourth indication information indicates that the measurement succeeds or fails, where the encrypted measurement result is encrypted based on a first key, and the first key is a key shared by the second terminal device and the first device.

With reference to the third aspect, in some implementations of the third aspect, the first information includes an identifier of the first device and/or purpose information indicating a measurement result use purpose.

With reference to the third aspect, in some implementations of the third aspect, that the first device receives a measurement result includes: The first device receives the measurement result from the second terminal device; and the method further includes: The first device receives a first request from the second terminal device, where the first request is used to request to establish a secure connection, and the secure connection is used to transmit the measurement result.

With reference to the third aspect, in some implementations of the third aspect, that the first device receives an encrypted measurement result includes: The first device receives the encrypted measurement result from the second terminal device; and the method further includes: The first device obtains the first key.

For beneficial effects of the method shown in the third aspect and the possible designs of the third aspect, refer to the beneficial effects in the first aspect and the possible designs of the first aspect.

According to a fourth aspect, a communication apparatus is provided. The apparatus is configured to perform the method provided in the first aspect.

The apparatus includes: a sending unit, configured to send a first request message to a second terminal device, where the first request message is used to request to obtain a distance and/or an angle between the communication apparatus and the second terminal device, the first request message includes first information, and the first information is used by the second terminal device to determine whether to agree to obtain the distance and/or the angle between the first terminal device and the second terminal device; and
a receiving unit, configured to receive a first response message from the second terminal device, where the first response message includes first indication information, the first indication information indicates a determining result of the second terminal device, and the determining result includes whether obtaining of the distance and/or the angle between the first terminal device and the second terminal device is agreed on.

With reference to the fourth aspect, in some implementations of the fourth aspect, before that a sending unit sends a first request message to a second terminal device, the receiving unit is further configured to receive a second request message from a first device, where the second request message is used to request to measure the distance and/or the angle between the communication apparatus and the second terminal device, and the second request message includes the first information.

With reference to the fourth aspect, in some implementations of the fourth aspect, the first information includes an identifier of the first device and/or purpose information indicating a measurement result use purpose.

With reference to the fourth aspect, in some implementations of the fourth aspect, when the determining result is that the second terminal device disagrees to obtain the distance and/or the angle between the first terminal device and the second terminal device, the first response message further includes a cause value, and the cause value indicates a cause why the second terminal device disagrees to obtain the distance and/or the angle between the first terminal device and the second terminal device.

With reference to the fourth aspect, in some implementations of the fourth aspect, the cause value indicates that the second terminal device disagrees to send a measurement result to the first device, and/or the cause value indicates that the second terminal device disagrees on the measurement result use purpose.

With reference to the fourth aspect, in some implementations of the fourth aspect, when the determining result is that the second terminal device agrees to obtain the distance and/or the angle between the first terminal device and the second terminal device, the first response message further includes second indication information, and the second indication information indicates that a measurement result calculating device is the communication apparatus or the second terminal device; and the apparatus further includes a processing unit, configured to determine, according to a privacy protection policy of the communication apparatus, whether to agree on content indicated by the second indication information.

With reference to the fourth aspect, in some implementations of the fourth aspect, when the second indication information indicates that the second terminal device is the measurement result calculating device, that the processing unit determines, according to a privacy protection policy of the communication apparatus, whether to agree on content indicated by the second indication information includes: When the privacy protection policy of the communication apparatus is that the second terminal device is allowed to obtain a measurement result, the processing unit determines to agree that the second terminal device is used as the measurement result calculating device; or when the privacy protection policy of the communication apparatus is that the second terminal device is not allowed to obtain a measurement result, the processing unit determines to disagree that the second terminal device is used as the measurement result calculating device.

With reference to the fourth aspect, in some implementations of the fourth aspect, the second indication information includes role information indicating a measurement role of the second terminal device.

With reference to the fourth aspect, in some implementations of the fourth aspect, when the role information indicates that the second terminal device is a reference terminal device, that the processing unit determines, according to a privacy protection policy of the communication apparatus, whether to agree on content indicated by the second indication information includes: When the privacy protection policy of the communication apparatus is that the second terminal device is allowed to obtain a measurement result, the processing unit determines to agree that the second terminal device is used as the reference terminal device; or when the privacy protection policy of the communication apparatus is that the second terminal device is not allowed to obtain a measurement result, the processing unit determines to disagree that the second terminal device is used as the reference terminal device.

With reference to the fourth aspect, in some implementations of the fourth aspect, the sending unit is further configured to send second information to the second terminal device, where the second information indicates whether the content indicated by the second indication information is agreed on.

With reference to the fourth aspect, in some implementations of the fourth aspect, when the communication apparatus obtains a measurement result by performing measurement, the processing unit determines not to send the measurement result to the second terminal device, and the sending unit is further configured to send a second response message to the first device, where the second response message includes the measurement result.

With reference to the fourth aspect, in some implementations of the fourth aspect, when the second terminal device obtains a measurement result by performing measurement, the receiving unit is further configured to receive third indication information from the second terminal device, where the third indication information indicates that the measurement result is successfully sent or fails to be sent; and
the sending unit is further configured to send a second response message to the first device, where the second response message includes fourth indication information, and the fourth indication information indicates that the measurement succeeds or fails.

According to a fifth aspect, a communication apparatus is provided. The apparatus is configured to perform the method in the second aspect.

The apparatus includes: a receiving unit, configured to receive a first request message from a first terminal device, where the first request message is used to request to obtain a distance and/or an angle between the first terminal device and the communication apparatus, and the first request message includes first information;
a processing unit, configured to determine, based on the first information, whether to agree to obtain the distance and/or the angle between the first terminal device and the second terminal device; and
a sending unit, configured to send a first response message to the first terminal device, where the first response message includes first indication information, the first indication information indicates a determining result of the communication apparatus, and the determining result includes whether obtaining of the distance and/or the angle between the first terminal device and the communication apparatus is agreed on.

With reference to the fifth aspect, in some implementations of the fifth aspect, the first information includes an identifier of a first device and/or purpose information indicating a measurement result use purpose.

With reference to the fifth aspect, in some implementations of the fifth aspect, when the first information includes the identifier of the first device, that the second terminal device determines, based on the first information, whether to agree to obtain the distance and/or the angle between the first terminal device and the second terminal device includes: The second terminal device determines, based on the identifier of the first device and a local policy, whether to agree to obtain the distance and/or the angle between the first terminal device and the second terminal device; and if the local policy indicates that a measurement result is allowed to be sent to the first device, the second terminal device agrees to obtain the distance and/or the angle between the first terminal device and the second terminal device; or if the local policy indicates that a measurement result is not allowed to be sent to the first device, the second terminal device disagrees to obtain the distance and/or the angle between the first terminal device and the second terminal device.

With reference to the fifth aspect, in some implementations of the fifth aspect, when the first information includes the purpose information, that the second terminal device determines, based on the first information, whether to agree to obtain the distance and/or the angle between the first terminal device and the second terminal device includes: The second terminal device determines, based on the purpose information and a local policy, whether to agree to obtain the distance and/or the angle between the first terminal device and the second terminal device; and if the local policy indicates that a measurement result is allowed to be used for the measurement result use purpose indicated by the purpose information, the second terminal device agrees to obtain the distance and/or the angle between the first terminal device and the second terminal device; or if the local policy indicates that a measurement result is not allowed to be used for the measurement result use purpose indicated by the purpose information, the second terminal device disagrees to obtain the distance and/or the angle between the first terminal device and the second terminal device.

With reference to the fifth aspect, in some implementations of the fifth aspect, when the communication apparatus agrees to obtain the distance and/or the angle between the first terminal device and the second terminal device, the processing unit is further configured to determine the second indication information according to a privacy protection policy of the communication apparatus, where the second indication information indicates that a measurement result calculating device is the first terminal device or the communication apparatus; and the first response message further includes the second indication information.

With reference to the fifth aspect, in some implementations of the fifth aspect, when the privacy protection policy of the communication apparatus is that the first terminal device is allowed to obtain a measurement result, the second indication information indicates that the measurement result calculating device is the first terminal device; or when the privacy protection policy of the communication apparatus is that the first terminal device is not allowed to obtain a measurement result, the second indication information indicates that the measurement result calculating device is the communication apparatus.

With reference to the fifth aspect, in some implementations of the fifth aspect, the second indication information includes role information indicating a measurement role of the communication apparatus.

With reference to the fifth aspect, in some implementations of the fifth aspect, when the privacy protection policy of the communication apparatus is that the first terminal device is allowed to obtain a measurement result, the role information indicates that the measurement role of the communication apparatus is a reference terminal device or a target terminal device; or when the privacy protection policy of the communication apparatus is that the first terminal device is not allowed to obtain a measurement result, the role information indicates that the measurement role of the communication apparatus is a reference terminal device.

With reference to the fifth aspect, in some implementations of the fifth aspect, the receiving unit is further configured to receive second information from the first terminal device, where the second information indicates whether the first terminal device accepts content indicated by the second indication information.

With reference to the fifth aspect, in some implementations of the fifth aspect, when the communication apparatus obtains a measurement result by performing measurement, the processing unit determines not to send the measurement result to the first terminal device, and the sending unit is configured to send the measurement result or an encrypted measurement result to the first device, where the encrypted measurement result is encrypted based on a first key, and the first key is a key shared by the communication apparatus and the first device.

With reference to the fifth aspect, in some implementations of the fifth aspect, before that the sending unit sends the measurement result, the sending unit is further configured to send a first request message to the first device, where the first request message is used to request to establish a secure connection, and the secure connection is used to transmit the measurement result.

With reference to the fifth aspect, in some implementations of the fifth aspect, before that the sending unit sends an encrypted measurement result, the processing unit is further configured to obtain the first key.

With reference to the fifth aspect, in some implementations of the fifth aspect, when the communication apparatus disagrees to obtain the distance and/or the angle between the first terminal device and the second terminal device, the first response message further includes a cause value, and the cause value indicates a cause why the communication apparatus disagrees to obtain the distance and/or the angle between the first terminal device and the second terminal device.

With reference to the fifth aspect, in some implementations of the fifth aspect, the cause value indicates that the communication apparatus disagrees to send a measurement result to the first device, and/or the cause value indicates that the communication apparatus disagrees on the measurement result use purpose.

According to a sixth aspect, a communication apparatus is provided. The apparatus is configured to perform the method in the third aspect.

The apparatus includes: a sending unit, configured to send a second request message to a first terminal device, where the second request message is used to request to measure a distance and/or an angle between the first terminal device and a second terminal device, the second request message includes first information, and the first information is used by the second terminal device to determine whether to agree on the measurement requested by using the second request message; and
a receiving unit, configured to receive at least one of the following information:
a measurement result, an encrypted measurement result, or fourth indication information, where the fourth indication information indicates that the measurement succeeds or fails, where the encrypted measurement result is encrypted based on a first key, and the first key is a key shared by the second terminal device and the communication apparatus.

With reference to the sixth aspect, in some implementations of the sixth aspect, the first information includes an identifier of the communication apparatus and/or purpose information indicating a measurement result use purpose.

With reference to the sixth aspect, in some implementations of the sixth aspect, that a receiving unit receives a measurement result includes:
the receiving unit receives the measurement result from the second terminal device; and
the receiving unit is further configured to receive a first request from the second terminal device, where the first request is used to request to establish a secure connection, and the secure connection is used to transmit the measurement result.

With reference to the sixth aspect, in some implementations of the sixth aspect, that a receiving unit receives an encrypted measurement result includes:
the receiving unit receives the encrypted measurement result from the second terminal device; and
the apparatus further includes a processing unit, configured to obtain the first key.

According to a seventh aspect, a communication apparatus is provided. The apparatus is configured to perform the methods provided in the first aspect to the third aspect. Specifically, the communication apparatus may include units and/or modules configured to perform the method provided in any one of the implementations of the first aspect to the third aspect, for example, a processing unit and an obtaining unit.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to an eighth aspect, this application provides a processor, configured to perform the methods provided in the foregoing aspects. In a process of performing the methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information and then the foregoing information is input into the processor.

Based on the foregoing principle, for example, receiving the request message in the foregoing method may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform the methods, or a processor, for example, a general-purpose processor, that executes computer instructions in the memory to perform the methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a ninth aspect, a computer-readable storage medium is provided. The computer-readable medium stores program code to be executed by a device, and the program code is used to perform any method provided in the first aspect to the third aspect.

According to a tenth aspect, a computer program product including instructions is provided. When the computer program product runs on a computer, the computer is enabled to perform any method provided in the first aspect to the third aspect.

According to an eleventh aspect, a chip is provided. The chip includes a processor and a communication interface. The processor reads, through the communication interface, instructions stored in a memory, to perform any method provided in the first aspect to the third aspect.

Optionally, in an implementation, the chip may further include a memory. The memory stores instructions, and the processor is configured to execute the instructions stored in the memory; and when executing the instructions, the processor is configured to perform any method provided in the first aspect to the third aspect.

According to a twelfth aspect, a communication system is provided. The system includes the communication apparatus provided in the fourth aspect to the sixth aspect.

### BRIEF DESCRIPTION OF DRAWINGS

FIG. 1 is a diagram of an architecture of a communication system applicable to embodiments of this application;
FIG. 2 is a diagram of a scenario to which an embodiment of this application is applicable;
FIG. 3 is a diagram of a supported ranging/sidelink positioning protocol layer;
FIG. 4 is a diagram of a ranging scenario;
FIG. 5 is a diagram of a positioning scenario;
FIG. 6 is a diagram of a ranging service procedure;
FIG. 7 is a schematic flowchart of a communication method according to this application;
FIG. 8 is a schematic flowchart of another communication method according to this application;
FIG. 9 is a schematic flowchart of another communication method according to this application;
FIG. 10 is a schematic flowchart of another communication method according to this application;
FIG. 11 is a block diagram of a communication apparatus according to an embodiment of this application;
FIG. 12 is a block diagram of a communication apparatus according to another embodiment of this application; and
FIG. 13 is a block diagram of a communication apparatus according to still another embodiment of this application.

### DESCRIPTION OF EMBODIMENTS

The following describes technical solutions in embodiments of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application can be further applied to a future communication system, for example, a 6th generation mobile communication system. With development of communication technologies, a mobile communication system supports conventional communication, and further supports, for example, device to device (device to device, D2D) communication, machine to machine (machine to machine, M2M) communication, machine type communication (machine type communication, MTC), and vehicle to everything (vehicle to everything, V2X) communication (which may also be referred to as internet of vehicles communication), for example, vehicle to vehicle (vehicle to vehicle, V2V) communication (which may also be referred to as vehicle-to-vehicle communication), vehicle to infrastructure (vehicle to infrastructure, V2I) communication (which may also be referred to as vehicle-to-infrastructure communication), vehicle to pedestrian (vehicle to pedestrian, V2P) communication (which may also be referred to as vehicle-to-pedestrian communication), and vehicle to network (vehicle to network, V2N) communication (which may also be referred to as vehicle-to-network communication).

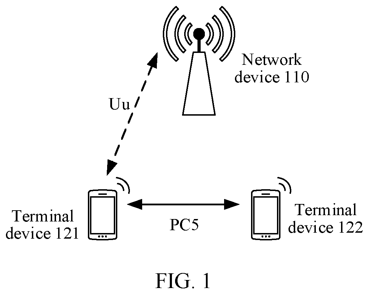

FIG. 1 is a diagram of an architecture of a communication system applicable to embodiments of this application.

The communication system applicable to embodiments of this application mainly includes a terminal device, for example, a terminal device 121 and a terminal device 122 shown in FIG. 1, and a network device, for example, a network device 110 shown in FIG. 1. In addition, the communication system mainly includes two communication interfaces, for example, a communication interface (a Uu interface) between the terminal device 121 and the network device 110 and a communication interface (a proximity-based services 5 (proximity-based services communication 5, PC5) interface) between the terminal device 121 and the terminal device 122. The Uu interface is used for communication between the terminal device and the network device, and the PC5 interface is used for sidelink communication between the terminal devices. A link used by the terminal device to send data to the network device on the Uu interface is referred to as an uplink (uplink), and a link used by the terminal device to receive data sent by the network device is referred to as a downlink (downlink). A link for transmitting data between the terminal devices on the PC5 interface is referred to as a sidelink (sidelink) or a straight-through link. The sidelink is generally used in a scenario in which direct communication can be performed between devices, such as device to device (device to device, D2D). In this scenario, data transmission between devices does not need to pass through a network device. Vehicle to everything (vehicle to everything, V2X) communication may be considered as a case of D2D communication.

On the Uu interface, one or both of data and radio resource control (radio resource control, RRC) signaling are transmitted between the terminal device and the network device through a radio bearer. A radio bearer used for data transmission is referred to as a data radio bearer (data radio bearer, DRB), and a bearer used for RRC signaling transmission is referred to as a signaling radio bearer (signaling radio bearer, SRB). A radio bearer includes a packet data convergence protocol (packet data convergence protocol, PDCP) entity and a radio link control (radio link control, RLC) bearer. An RLC bearer includes an RLC entity and a corresponding logical channel (Logical Channel, LCH). A configuration of the radio bearer is configurations of a PDCP entity, an RLC entity, and a logical channel of the radio bearer. The configuration of the radio bearer needs to meet a quality of service (quality of service, QoS) requirement of a service transmitted through the radio bearer. On the Uu interface, the radio bearer is configured by the network device for the terminal device.

On the PC5 interface, one or both of data and RRC signaling are also transmitted between the terminal devices through a radio bearer. The radio bearer on the PC5 interface may be referred to as a sidelink radio bearer (sidelink radio bearer, SL RB). In a long term evolution (long term evolution, LTE) V2X system, radio bearers on a PC5 interface are respectively established by a transmit-end terminal device and a receive-end terminal device, and a configuration of the radio bearer is pre-defined in a standard or is determined by the transmit-end terminal device and the receive-end terminal device through negotiation.

In future communication, names of the Uu interface or the PC5 interface may remain unchanged, or may be replaced with other names. This is not limited in this application.

It should be understood that in FIG. 1, communication between the network device and the terminal device is used as an example to briefly describe a communication scenario to which this application can be applied, and this does not impose a limitation on another scenario to which this application can be applied.

It should be further understood that FIG. 1 is merely a simplified diagram of an example for ease of understanding. The communication system may further include another network device or may further include another terminal device, which is not shown in FIG. 1.

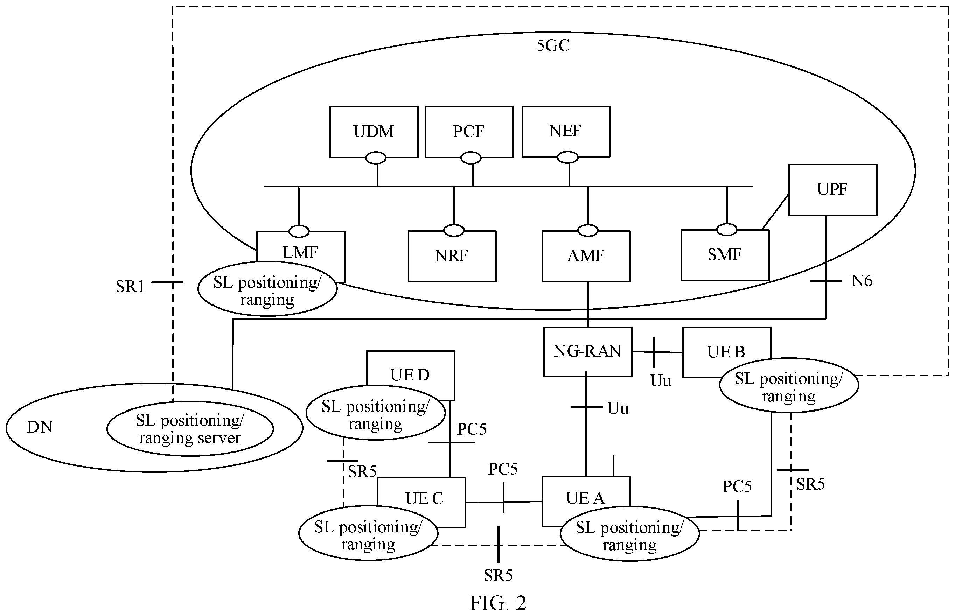

Specifically, this application mainly relates to a sidelink positioning (sidelink positioning, SL positioning) service (or a sidelink ranging (SL Ranging) service) in a 5G system architecture, which is collectively referred to as an SL positioning/ranging service below. For ease of understanding, the following briefly describes an architecture of an SL positioning/ranging service in service-based 5G with reference to FIG. 2. FIG. 2 is a diagram of a scenario to which an embodiment of this application is applicable. It should be understood that the 5G system described in this specification is merely an example, and should not constitute any limitation on this application.

As shown in FIG. 2, a communication system architecture of the SL positioning/ranging service may include but is not limited to the following parts:
a user equipment (user equipment, UE), an access network (access network, AN), a core network (core network, CN), a data network (data network, DN), and a sidelink positioning server (SL positioning/Ranging server). The user equipment includes a positioned or ranging device. The access network may be configured to implement a radio access-related function. The DN is a network located outside an operator network. The SL positioning/ranging server implements an SL positioning/ranging function. The core network may include but is not limited to the following network elements: an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM), a network exposure function (network exposure function, NEF) network element, and a location management function (location management function, LMF) network element.

The following briefly describes the network elements shown in FIG. 2.
1. User equipment: It may be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device that has a wireless connection function. Currently, some examples of the terminal may be a mobile phone (mobile phone), a tablet computer (pad), a computer (for example, a laptop or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (Internet of things, IoT) system. An IoT is an important part in future development of information technologies. A main technical feature of the IoT is to connect things to a network by using a communication technology, to implement an intelligent network for human-machine interconnection and thing-thing interconnection. An IoT technology can achieve massive connections, deep coverage, and terminal power saving by using, for example, a narrowband (narrowband, NB) technology.

In addition, the terminal device may further include an intelligent printer, a train detector, and the like, and main functions include collecting data (which is a function of some terminal devices), receiving control information and downlink data of a network device, sending an electromagnetic wave, and transmitting uplink data to the network device.

It should be understood that the user equipment may be any device capable of accessing a network. The terminal device may communicate with an access network device by using an air interface technology.

Optionally, the user equipment may be used as a base station. For example, the user equipment may be used as a scheduling entity that provides a sidelink signal between user equipments in V2X, D2D, or the like. For example, a cellular phone and an automobile communicate with each other via a sidelink signal. A cellular phone communicates with a smart home device without relaying a communication signal through a base station.

It should be noted that a user equipment that can be used for SL positioning/ranging has an SL positioning/ranging (sidelink positioning/ranging) function. User equipments having the SL positioning/ranging function communicate with each other through an SR5 interface (as shown in FIG. 2, a UE A and a UE B communicate with each other through an SR5 interface, the UE A and a UE C communicate with each other through an SR5 interface, and the UE C and a UE D communicate with each other through an SR5 interface).

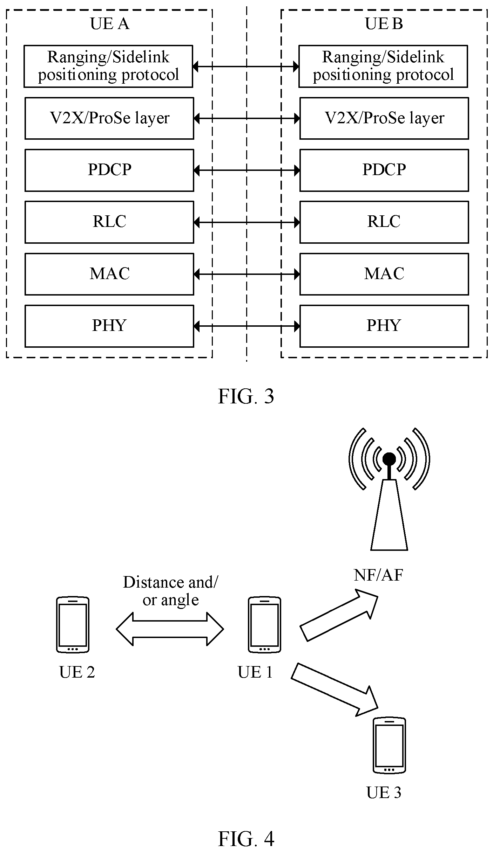

For example, a ranging/sidelink positioning protocol (Ranging/Sidelink Positioning Protocol, RSPP) layer supported by the UE is shown in FIG. 3.

2. (Radio) access network ((radio) access network, (R)AN) device: It is configured to provide a network access function for an authorized user equipment in a specific area, and is capable of using transmission tunnels with different quality of service based on a level of the user equipment, a service requirement, and the like.

The (R)AN can manage radio resources and provide an access service for a user equipment, to forward a control signal and user equipment data between the user equipment and a core network. The (R)AN may also be understood as a base station in a conventional network.

For example, the access network device in embodiments of this application may be any communication device with a wireless transceiver function for communicating with the user equipment. The access network device includes but is not limited to an evolved NodeB (evolved NodeB, eNB), a gNB or a transmission point (TRP or TP) in a 5G system, for example, NR, or one antenna panel or a group of antenna panels (including a plurality of antenna panels) of a base station in the 5G system, or may be a network node that forms a gNB or a transmission point, for example, a baseband unit (BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

3. User plane function network element: It is configured for packet routing and forwarding, quality of service (quality of service, QoS) handling for user plane data, and the like. For ease of description, in embodiments of this application, the user plane function network element is referred to as a "UPF" for short.

In a future communication system, the user plane function network element may still be a UPF network element, or may have another name. This is not limited in this application.

4. Access and mobility management function network element: It is mainly configured to perform mobility management, access management, and the like, and may be configured to implement a function, for example, an access authorization/authentication function, other than session management in functions of an MME. For ease of description, in embodiments of this application, the access and mobility management function network element is referred to as an "AMF" for short.

In a future communication system, the access and mobility management function network element may still be an AMF, or may have another name. This is not limited in this application.

5. Network exposure function network element: It is mainly configured to support exposure of capabilities and events. For ease of description, in embodiments of this application, the network exposure function network element is referred to as an "NEF" for short.

In a future communication system, the network exposure function network element may still be an NEF, or may have another name. This is not limited in this application.

6. Location management function network element: It may be configured to implement location estimation of a terminal device. The SL positioning/ranging server may be an application function (application function, AF) of the DN. An AF having a function of the SL positioning/ranging server has all functions of an AF defined in the 23.501 R-15 version and a function related to an SL positioning/ranging service. In other words, in a control plane architecture, user plane communication is performed between the SL positioning/ranging server and a UE through a UE-RAN-UPF-AF path. The SL positioning/ranging server may further communicate with another function network element (network function, NF) in the core network through the NEF, for example, communicate with the PCF through the NEF. Details are not described herein again.

7. Session management function network element: It is mainly configured for session management, allocation and management of internet protocol (internet protocol, IP) addresses of user equipments, selection and management of a user plane function, termination of interfaces towards policy control and charging functions, downlink data notification, and the like. For ease of description, in embodiments of this application, the session management function network element is referred to as an "SMF" for short.

The SMF is a type of session management network element. In a future communication system, the session management network element may still be an SMF, or may have another name. This is not limited in this application.

8. Policy control function network element: It supports a unified policy framework to govern network behavior, provides policy rule information to a control plane function network element (for example, the AMF or the SMF), and the like.

In a future communication system, the policy control network element may still be a PCF network element, or may have another name. This is not limited in this application.

9. Unified data management network element: It is configured for UE identification handling, access authentication, registration, mobility management, and the like.

In a future communication system, the unified data management network element may still be a UDM network element, or may have another name. This is not limited in this application.

10. Data network: The DN is a network located outside the operator network. The operator network may access a plurality of DNs, and a plurality of services may be deployed on the DN, to provide a service such as data and/or voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

It may be understood that the foregoing network elements or functions may be network elements in a hardware device, may be software functions running on dedicated hardware, or may be virtualized functions instantiated on a platform (for example, a cloud platform).

It should be noted that names of the network elements and communication interfaces between the network elements in FIG. 2 are briefly described by using an example specified in a current protocol. However, embodiments of this application are not limited to being applicable only to a currently known communication system. Therefore, standard names used when the current protocol is used as an example for description are all function descriptions. A specific name of a network element, an interface, signaling, or the like is not limited in this application, and only represents a function of the network element, the interface, or the signaling, and may be correspondingly extended to another system, for example, a future communication system.

For ease of understanding of the technical solutions in embodiments of this application, some terms or concepts that are used in embodiments of this application are first briefly described.
1. Reference UE (Reference UE): It is a UE configured to determine a reference plane and a reference direction in a positioning/ranging-based service.
2. Target UE (Target UE): It is a UE that is measured relative to an angle/distance of the reference UE in the positioning/ranging-based service.
3. 5G SL positioning/ranging service: The ranging (Ranging) service is understood as calculating an angle and/or a distance between two UEs. FIG. 4 is used as an example. A UE 1 receives a ranging service request from a core network element (an NF), an application server (an AF), or a UE 3, where the ranging service request is used to measure and calculate a distance and/or an angle between the UE 1 and a UE 2. It may be understood that, the ranging service request may alternatively be actively initiated by the UE 1, instead of being from the foregoing NF, AF, or UE 3.

For ease of description, a device that sends a ranging service request is referred to as a ranging request device below. For example, the ranging request device in this application includes but is not limited to the foregoing NF, AF, or UE 3.

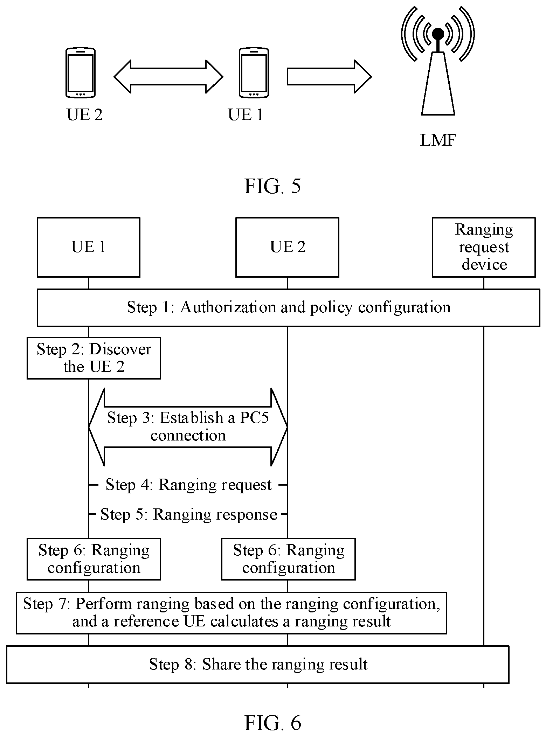

A sidelink positioning (SL positioning) service is understood as calculating a location of the UE 2. FIG. 5 is used as an example. An LMF separately obtains a location of a UE 1 and a ranging service result between the UE 1 and a UE 2, and obtains a location of the UE 2 through calculation. It may be understood that the sidelink positioning service depends on a result of the ranging service.

The following embodiments are described by using a ranging service as an object, and the ranging service includes but is not limited to being applied to a sidelink positioning service.

4. Ranging service procedure: For ease of understanding, a ranging service procedure defined in a 3GPP network is briefly described with reference to FIG. 6. As shown in FIG. 6, the ranging service procedure includes the following steps.

Step 1: A UE 1 and a UE 2 may obtain a ranging authorization policy and a parameter from a PCF in a registration process. The ranging authorization policy and the parameter may include whether the UE is authorized as a reference UE or is authorized as a target UE.

For example, the UE 1 receives a ranging service request message of a ranging request device, where the ranging service request message is used to request to measure and calculate a distance and/or an angle between the UE 1 and the UE 2.

Step 2: The UE 1 discovers the UE 2 through a discovery procedure.

Step 3: After discovering the UE 2, the UE 1 establishes a PC5 connection to the UE 2.

For example, the UE 1 sends an announcement message, where the message carries a UE 2 ID. The UE 2 ID may be a service identifier, an application layer identifier, or another identifier. The UE 2 receives the announcement message, and determines, based on content of the announcement message, whether to establish a connection to the UE 1.

Step 4: The UE 1 sends a ranging request to the UE 2.

Specifically, the ranging request is used to negotiate a ranging parameter.

For example, the ranging request includes the ranging parameter, for example, a first ranging role (the UE 2 is the reference UE/target UE, or the UE 1 is the target UE/reference UE) and ranging for distance and/or direction measurement.

For example, when an indication of the first ranging role is that the UE 1 is the reference UE, it indicates that the UE 1 is used as the reference UE, in other words, the UE 2 is used as the target UE; or when an indication of the first ranging role is that the UE 1 is the target UE, it indicates that the UE 1 is used as the target UE, in other words, the UE 2 is used as the reference UE. Optionally, the first ranging role may alternatively indicate a role that the UE 1 expects the UE 2 to play.

Step 5: The UE 2 sends a ranging response to the UE 1.

Specifically, if the UE 2 wants to change the ranging role, for example, due to a limitation of a ranging capability, the ranging response includes a second ranging role. The second ranging role may alternatively indicate a role that the UE 2 expects to play. The second ranging role may be the same as or different from the first ranging role.

For example, that the second ranging role is the same as the first ranging role indicates that the role that the UE 1 expects the UE 2 to play is the same as the role that the UE 2 expects to play.

Step 6: A ranging layer of each UE provides a ranging configuration to an access stratum. The ranging configuration includes a ranging role (the reference UE or the target UE), and ranging for distance and/or direction measurement.

Step 7: The access stratum of each UE sends or receives ranging signaling based on the ranging configuration, and the reference UE calculates a ranging result. For example, for ranging for direction measurement, the target UE sends ranging signaling, and the reference UE receives the ranging signaling accordingly.

Step 8: The UE 1 and the UE 2 share the ranging result, and send the ranging result to the ranging request device.

It may be understood that steps 4 and 5 and steps 2 and 3 may be independent, or may be coupled. For example, the UE 1 sends an announcement message, where the message carries a ranging role indication (a reference UE or a target UE), and the UE 2 receives the announcement message, and determines, based on content of the announcement message, whether to establish a connection to the UE 1.

5. Authentication and key management for applications (Authentication and Key Management for Applications, AKMA) or generic bootstrapping architecture (Generic Bootstrapping Architecture, GBA): When security protection needs to be performed on a channel between a UE and an AF, an application key generated by the AKMA/GBA may be used as an authentication credential, and a secure channel for key transmission is established between the UE and the AF.

Specific implementations include but are not limited to the following implementations:
A UE generates an application key before performing authentication with a network side. An AKMA/GBA process is decoupled from an authentication process. Specific steps are as follows:
Step 1: Before initiating a request, the UE generates a key identifier KID, and the UE includes the KID in an application request message. If the UE uses AKMA, the KID is an A-KID. If the UE uses a GBA, the KID is a B-TID.
Step 2: If an AF does not have an activated context associated with the KID, the AF selects an AKMA anchor function (AKMA Anchor Function, AAnF) or a BSF and sends a key request, where the key request carries the KID. If the AKMA is used, the AF selects the AAnF. If the GBA is used, the AF selects the BSF.
Step 3: The AAnF/BSF queries or generates a corresponding AF key based on the KID.
Step 4: The AF returns an application response message to the UE.
Step 5: The UE initiates a service request to the AF.
Step 6: When authentication needs to be performed on the UE, the AF sends an HTTP reply message to the UE, where the message carries a status code 401, indicating that the UE is not authorized and authentication needs to be performed.
Step 7: The UE sends an authentication request to the AF based on the status code 401 carried in step 6, where the authentication request carries an identifier of an application key; and generates an authentication parameter based on the application key.
Step 8: The AF authenticates the UE based on the authentication parameter, and sends a status code to the UE based on an authentication result.
Step 9: The UE and AF negotiate a security communication key based on the authentication result.

In addition, to facilitate understanding of embodiments of this application, the following several descriptions are provided.

First, in this application, "indicate" may include "directly indicate" and "indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners for indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application.

Second, "at least one" shown in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. Sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "710" and "720" are merely identifiers for ease of description, and do not limit a sequence of performing steps.

Third, in this application, the word "example" or "for example" represents giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a relative concept in a specific manner.

Fourth, "storing" in embodiments of this application may mean storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

With reference to FIG. 1, the foregoing briefly describes a scenario to which a communication method provided in embodiments of this application can be applied, and describes basic concepts that may be used in embodiments of this application.

It can be learned from the ranging service procedure described in the foregoing basic concepts that, when the ranging request device sends the ranging service request to the UE 1, measurement for a ranging service is performed between the UE 1 and the UE 2. When the UE 1 is used as the reference UE, the UE 1 may obtain a ranging result between the UE 1 and the UE 2. However, a problem of UE privacy leakage is not considered in the ranging service procedure. Examples of problems include:
(1) When user consent is not obtained, the UE 1 calculates a ranging result between the UE 1 and the UE 2, and then sends the ranging result to the ranging request device. This causes privacy leakage of the UE 2.
(2) The UE 1 (if the UE 1 is used as the reference UE for ranging) may infer a location of the UE 2 based on a location of the UE 1 and a ranging result. This causes privacy leakage of the UE 2 to the UE 1.

To avoid a privacy leakage problem that may be caused by the foregoing ranging service procedure, this application provides a communication method, to implement a ranging service while ensuring that privacy is not leaked.

It should be understood that the communication method provided in embodiments of this application may be applied to a communication system of an SL positioning/ranging service, for example, the communication system 100 shown in FIG. 1.

It should be further understood that a specific structure of an execution body of the method provided in embodiments of this application is not specifically limited in embodiments, provided that communication can be performed according to the method provided in embodiments of this application by running a program that records code of the method provided in embodiments of this application. For example, the execution body of the method provided in embodiments of this application may be a device, or may be a functional module that is in the device and that can invoke a program and execute the program.

The following describes in detail the communication method provided in embodiments of this application by using interaction between devices as an example.

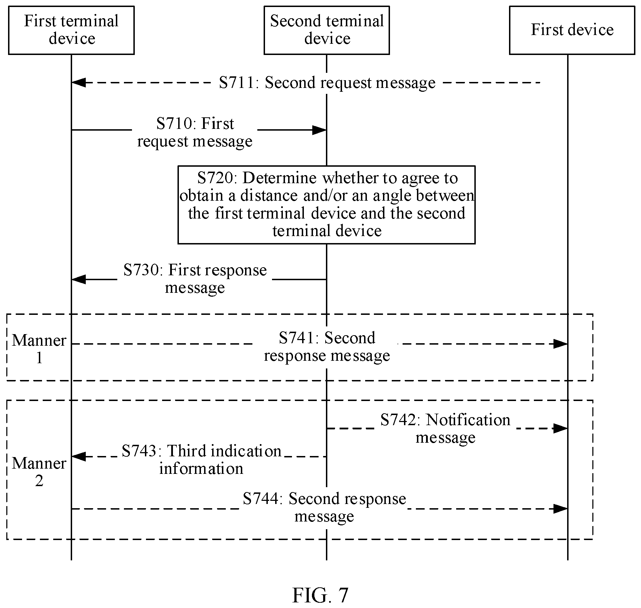

FIG. 7 is a schematic flowchart of a communication method according to this application. The method includes the following steps.

S710: A first terminal device sends a first request message to a second terminal device, in other words, the second terminal device receives the first request message from the first terminal device.

The first request message is used to request to obtain a distance and/or an angle between the first terminal device and the second terminal device. Optionally, the first request message may be further used to request to negotiate a measurement parameter. In this embodiment, the first request message includes but is not limited to a request message used to request ranging, positioning, sensing, or the like.

For example, the first request message includes a measurement-related parameter expected by the first terminal device, and the measurement-related parameter includes but is not limited to perform measurement roles of the first terminal device and the second terminal device in a measurement process.

For example, the first terminal device may indicate, by using fifth indication information, the measurement roles that are of the first terminal device and the second terminal device in the measurement process and that are expected by the first terminal device. For example, the first request message includes fifth indication information, and the fifth indication information indicates that a measurement result calculating device is the first terminal device or the second terminal device, where the indication of the measurement result calculating device is equivalent to indicating the measurement role.

In a possible implementation, the fifth indication information may be measurement role information #1. When a measurement role of a device in a measurement process is a reference UE, it may be understood that the device is a measurement result calculating device. Therefore, the measurement result calculating device may be indicated by indicating the measurement role.

For example, the measurement role information #1 indicates a measurement role (a reference UE or a target UE) of the first terminal device in the measurement process, and indicates a measurement role (the reference UE or the target UE) of the second terminal device in the measurement process.

In another possible implementation, the fifth indication information may be information indicating a measurement result calculating device, and the information indicating the measurement result calculating device indicates that the first terminal device is the measurement result calculating device or indicates that the second terminal device is the measurement result calculating device.

It should be understood that the two implementations are merely examples for describing possible implementations of the fifth indication information, and do not constitute any limitation on the protection scope of this application. Other information that can indicate the measurement result calculating device or the measurement role falls within the protection scope of this application.

For example, in this embodiment, the first terminal device and the second terminal device are two devices participating in sidelink measurement, and may be the UE 1 and the UE 2 shown in FIG. 6. It should be understood that specific forms of the first terminal device and the second terminal device are not limited in this embodiment, provided that corresponding functions can be implemented.

Specifically, in this embodiment, the first request message includes first information, and the first information is used by the second terminal device to determine whether to agree to obtain the distance and/or the angle between the first terminal device and the second terminal device, in other words, the second terminal device determines, based on the first information, whether to agree on a measurement request of the first terminal device.

For example, when the first request message is used to request to obtain the distance between the first terminal device and the second terminal device, the second terminal device may determine, based on the first information carried in the first request message, whether to agree to measure the distance between the first terminal device and the second terminal device.

In a possible implementation, in this embodiment, the first terminal device actively initiates the measurement request, in other words, the first terminal device may actively send the first request message to the second terminal device.

In another possible implementation, in this embodiment, the first terminal device may passively initiate the measurement request, in other words, in this implementation, before the first terminal device sends the first request message to the second terminal device, the first terminal device may receive a second request message from a first device (or a device that uses a measurement result).

For ease of description, the following mainly uses an example in which the first terminal device receives the second request message of the first device for description. The method procedure shown in FIG. 7 further includes:
S711: The first device sends the second request message to the first terminal device, in other words, the first terminal device receives the second request message from the first device.

Specifically, the second request message is used to request to measure the distance and/or the angle between the first terminal device and the second terminal device.

In this embodiment, the first device is a device that sends the second request message to the first terminal device. For example, the first device may be understood as the device that uses the measurement result, or may be understood as a device that requests the measurement. The first device includes but not is limited to a third terminal device, an AF, or an NF.

For example, the first terminal device is a vehicle #1, the second terminal device is a vehicle #2, the first device is a vehicle #3 or a cloud platform server for vehicle management, and the distance and/or the angle between the first terminal device and the second terminal device are/is used to perform a function such as vehicle scheduling or vehicle obstacle avoidance.

For another example, the first terminal device is an acoustic device #1, the second terminal device is an acoustic device #2, the first device is a cloud platform server or a terminal for acoustic device management, and the distance and/or the angle between the first terminal device and the second terminal device are/is used to perform a function such as a sound field optimization.

For example, in this embodiment, the first device may directly send the second request message to the first terminal device. For example, the first device is the third terminal device.

For example, in this embodiment, the first device may send a second request message to the first terminal device through an AMF. For example, the first device is the AF, and the AF sends a request message #1 to the AMF. The request message #1 is used to request to measure the distance and/or the angle between the first terminal device and the second terminal device. After receiving the request message #1, the AMF may send, to the first terminal device, the second request message used to request to measure the distance and/or the angle between the first terminal device and the second terminal device, where the second request message is a NAS message.

Optionally, in this implementation, after receiving the second request message, the first terminal device may discover the second terminal device through a discovery procedure, and after discovering the second terminal device, the first terminal device establishes a PC5 connection to the second terminal device.

For example, the first terminal device sends an announcement message, where the announcement message carries an identifier of the second terminal device (for example, an ID of the second terminal device). The identifier of the second terminal device may be a service identifier, an application layer identifier, or another identifier. This is not limited in this embodiment. The second terminal device receives the announcement message, and determines, based on content of the announcement message, whether to establish a connection to the first terminal device.

Optionally, the first request message and the announcement message in the discovery procedure may be one message, or may be different messages. This is not limited in this embodiment.

It should be understood that a process in which the first terminal device discovers the second terminal device and establishes the PC5 connection to the second terminal device is not limited in this embodiment. For details, refer to descriptions, specified in a current protocol, about establishing a PC5 connection between terminal devices in a ranging service procedure. Details are not described herein.

Specifically, the second request message includes first information. In this embodiment, the first information carried in the second request message may be generated by the device (for example, the third terminal device, the AF, or the NF) that requests the measurement, or may be generated by the AMF (for example, the device that requests the measurement is the AF, the AMF or a core network element generates the first information, and the AMF sends the first information to the first terminal device by using the second request message).

In a possible implementation, the second request message includes the first information. In other words, the first information included in the first request message is all of the first information included in the second request message. After receiving the second request message, the first terminal device may send the first information included in the second request message to the second terminal device by using the first request message.

In another possible implementation, the second request message includes first information #1, and the first information #1 includes the first information. In other words, the first information included in the first request message is a part of the first information #1 included in the second request message. After receiving the second request message, the first terminal device may send partial information of the first information #1 included in the second request message to the second terminal device by using the first request message.

For example, the first information includes an identifier of the first device and/or purpose information indicating a measurement result use purpose.

For example, the first information includes the identifier of the first device (for example, an identifier of the third terminal device, an identifier of the AF, or an identifier of the NF). The identifier of the first device includes information that can identify the first device. For example, the identifier of the first device includes but is not limited to:
an ID of the first device, an IP address of the first device, or type information of the first device.

For ease of understanding, an example in which the first device is a server is used. The identifier of the first device may be name information of the server, may be an IP address of the server, may be a domain name of the server, or the like.

It should be understood that a specific form of the identifier of the first device is not limited in this embodiment, and all information that can identify the first device falls within the protection scope of this application.

For another example, the first information includes the purpose (purpose) information, and the purpose information indicates the measurement result use purpose. For example, if the measurement result is used for sidelink positioning, the purpose information indicates positioning. For another example, if the measurement result is used for vehicle networking, the purpose information indicates networking.

Optionally, the purpose information may be information at a usage granularity. For example, the purpose information is information indicating vehicle obstacle avoidance, or the purpose information is information indicating device networking. Specifically, the purpose information may be encoded information for encoding different purposes. For example, if a vehicle obstacle avoidance code is 00, the purpose information may be 00 when the purpose information is information indicating vehicle obstacle avoidance. For another example, if a device networking code is 01, the purpose information may be 01 when the purpose information is information indicating device networking. Alternatively, the purpose information may be identified by using a character. For example, vehicle obstacle avoidance characters are "VO", and device networking characters are "DI".

Optionally, the purpose information may be information at a service granularity. For example, the purpose information is information indicating a V2X service, or the purpose information is information indicating a public safety service.

It should be understood that a specific form of the purpose information is not limited in this embodiment, and all information that can indicate the measurement result use purpose falls within the protection scope of this application.

For example, the first information may alternatively be an identifier of the first terminal device. The identifier of the first terminal device includes information that can identify the first terminal device. For example, the identifier of the first terminal device includes but is not limited to:
an ID of the first terminal device, an IP address of the first terminal device, or type information of the first terminal device.

Specifically, when the first information is the identifier of the first terminal device, the second terminal device may determine, based on the first information, whether to allow the first terminal device to perform measurement or obtain a measurement result. The following describes a determining process of the second terminal device in detail with reference to step S720. Details are not described herein again.

It should be understood that the foregoing descriptions are merely examples for describing possible forms of the first information, and do not constitute any limitation on the protection scope of this application. Other information that can assist the second terminal device in determining whether to agree to obtain the distance and/or the angle between the first terminal device and the second terminal device falls within the protection scope of this application.

Further, after receiving the first request message, the second terminal device may determine, based on the first information carried in the first request message, whether to agree to obtain the distance and/or the angle between the first terminal device and the second terminal device. The method procedure shown in FIG. 7 further includes:
S720: The second terminal device determines, based on the first information, whether to agree to obtain the distance and/or the angle between the first terminal device and the second terminal device.

Specifically, that the second terminal device determines, based on the first information, whether to agree to obtain the distance and/or the angle between the first terminal device and the second terminal device may be understood as that the second terminal device determines, based on the first information, whether to authorize on the measurement procedure requested by using the first request message; may be understood as that the second terminal device determines, based on the first information, whether to agree to the request of the first request message; or may be understood as that the second terminal device determines, based on the first information, whether to agree on content requested by using the first request message. For example, the second terminal device determines, based on the first information, whether to agree to ranging. For another example, the second terminal device determines, based on the first information, whether to agree on angle measurement. For another example, the second terminal device determines, based on the first information, whether to agree to obtaining of a ranging result. For another example, the second terminal device determines, based on the first information, whether to agree to obtaining of an angle measurement result.

In a possible implementation, the first information includes the identifier of the first device.

In this implementation, the second terminal device may determine, based on the identifier of the first device and a local policy (or configuration information), whether to agree to obtain the distance and/or the angle between the first terminal device and the second terminal device.

If the local policy indicates that a measurement result is allowed to be sent to the first device, the second terminal device agrees to obtain the distance and/or the angle between the first terminal device and the second terminal device; otherwise, the second terminal device disagrees to obtain the distance and/or the angle between the first terminal device and the second terminal device.

Optionally, in this implementation, the local policy may be a list of devices that are allowed to obtain a measurement result between the second terminal device and another terminal device (including but not limited to the first terminal device). When the first device indicated by the identifier of the first device is a device in the list of devices, the second terminal device agrees to obtain the distance and/or the angle between the first terminal device and the second terminal device.

Optionally, in this implementation, the local policy may be a list of devices that are not allowed to obtain a measurement result between the second terminal device and another terminal device (including but not limited to the first terminal device). When the first device indicated by the identifier of the first device is a device in the list of devices, the second terminal device disagrees to obtain the distance and/or the angle between the first terminal device and the second terminal device. When the first device indicated by the identifier of the first device is not a device in the list of devices, the second terminal device agrees to obtain the distance and/or the angle between the first terminal device and the second terminal device.

Optionally, in this implementation, the local policy may be an identifier list of devices that are allowed to obtain a measurement result between the second terminal device and another terminal device (including but not limited to the first terminal device). When the identifier of the first device is an identifier in the identifier list, the second terminal device agrees to obtain the distance and/or the angle between the first terminal device and the second terminal device.

Optionally, in this implementation, the local policy may be an identifier list of devices that are not allowed to obtain a measurement result between the second terminal device and another terminal device (including but not limited to the first terminal device). When the identifier of the first device is an identifier in the identifier list, the second terminal device disagrees to obtain the distance and/or the angle between the first terminal device and the second terminal device.

For example, the local policy may be preconfigured by a user on the second terminal device, or may be configuration information that is generated and sent by a core network device based on subscription data and that is stored in the second terminal device. For example, the local policy may be that the AMF or another core network element obtains subscription data from a UDM, the AMF sends, to the second terminal device, a NAS message carrying the subscription data, and the second terminal device stores the subscription data, where the subscription data includes the local policy. How the second terminal device obtains the local policy is not limited in this embodiment.

For example, the identifier of the first device indicates the third terminal device. If the second terminal device determines, according to the local policy, that the third terminal device is a device in the list of devices, the second terminal device determines to agree to obtain the distance and/or the angle between the first terminal device and the second terminal device.

For another example, the identifier of the first device indicates a fourth terminal device. If the second terminal device determines, according to the local policy, that the fourth terminal device is not a device in the list of devices, the second terminal device determines to disagree to obtain the distance and/or the angle between the first terminal device and the second terminal device.

In another possible implementation, the first information includes the purpose information indicating the measurement result use purpose.

In this implementation, the second terminal device may determine, based on the measurement result use purpose indicated by the purpose information and a local policy, whether to agree to obtain the distance and/or the angle between the first terminal device and the second terminal device.

If the local policy indicates that a measurement result is allowed to be used for the measurement result use purpose indicated by the purpose information, the second terminal device agrees to obtain the distance and/or the angle between the first terminal device and the second terminal device; otherwise, the second terminal device disagrees to obtain the distance and/or the angle between the first terminal device and the second terminal device.

Optionally, in this implementation, the local policy may be a list of purposes for which obtaining of a measurement result between the second terminal device and another terminal device (including but not limited to the first terminal device) is allowed. When the measurement result use purpose indicated by the purpose information is a purpose in the list of purposes, the second terminal device agrees to obtain the distance and/or the angle between the first terminal device and the second terminal device.

Optionally, in this implementation, the local policy may be a list of purposes for which obtaining of a measurement result between the second terminal device and another terminal device (including but not limited to the first terminal device) is not allowed. When the measurement result use purpose indicated by the purpose information is a purpose in the list of purposes, the second terminal device disagrees to obtain the distance and/or the angle between the first terminal device and the second terminal device.

Optionally, in this implementation, the local policy may be an information list of purpose information for which obtaining of a measurement result between the second terminal device and another terminal device (including but not limited to the first terminal device) is allowed. When the purpose information is one piece of information in the information list, the second terminal device agrees to obtain the distance and/or the angle between the first terminal device and the second terminal device.

Optionally, in this implementation, the local policy may be an information list of purpose information for which obtaining of a measurement result between the second terminal device and another terminal device (including but not limited to the first terminal device) is not allowed. When the purpose information is one piece of information in the information list, the second terminal device disagrees to obtain the distance and/or the angle between the first terminal device and the second terminal device.

For example, the measurement result use purpose indicated by the purpose information is positioning. If the second terminal device determines, according to the local policy, that positioning is a purpose in the list of purposes, the second terminal device determines to agree that the measurement result is used for positioning. In this case, the second terminal device determines to agree to obtain the distance and/or the angle between the first terminal device and the second terminal device.

For another example, the measurement result use purpose indicated by the purpose information is networking. If the second terminal device determines, according to the local policy, that networking is not a purpose in the list of purposes, the second terminal device determines to disagree that the measurement result is used for networking. In this case, the second terminal device determines to disagree to obtain the distance and/or the angle between the first terminal device and the second terminal device.

In still another possible implementation, the first information is the first request message.

Optionally, in this implementation, the second terminal device may determine, based on the received first request message and a local policy, whether to agree to obtain the distance and/or the angle between the first terminal device and the second terminal device.

If the local policy indicates that obtaining of the distance and/or the angle between the first terminal device and the second terminal device is allowed, the second terminal device agrees to obtain the distance and/or the angle between the first terminal device and the second terminal device; otherwise, the second terminal device disagrees to obtain the distance and/or the angle between the first terminal device and the second terminal device.

The local policy may be a list of obtainable information that is between the second terminal device and another terminal device and that is allowed to be obtained. When the obtained information requested by using the first request message is obtainable information in the list of obtainable information, the second terminal device agrees to obtain the distance and/or the angle between the first terminal device and the second terminal device.

For example, if the first request message is used to request to obtain the distance between the first terminal device and the second terminal device, and the obtainable information indicated by the local policy does not include distance information, the second terminal device disagrees to obtain the distance between the first terminal device and the second terminal device.

Optionally, in this implementation, the second terminal device may determine, based on the received first request message, whether to agree to obtain the distance and/or the angle between the first terminal device and the second terminal device.

For example, the second terminal device receives the first request message, but the second terminal device does not expect a measurement service, in other words, rejects any measurement request to protect user privacy. For example, if the second terminal device has a ranging capability, but the second terminal device disagrees to disclose the measurement result to a measurement user, the second terminal device determines to disagree to obtain the distance and/or the angle between the first terminal device and the second terminal device.

In still another possible implementation, the first information is the identifier of the first terminal device.

In this implementation, the second terminal device may determine, based on the identifier of the first terminal device and a local policy, whether to agree to obtain the distance and/or the angle between the first terminal device and the second terminal device.

If the local policy indicates that the first terminal device is allowed to perform the measurement or obtain the measurement result, the second terminal device agrees to obtain the distance and/or the angle between the first terminal device and the second terminal device; otherwise, the second terminal device disagrees to obtain the distance and/or the angle between the first terminal device and the second terminal device.

Optionally, in this implementation, the local policy may be a list of devices that are allowed to perform measurement or obtain a measurement result between the second terminal device and another terminal device (including but not limited to the first terminal device). When the first terminal device indicated by the identifier of the first terminal device is a device in the list of devices, the second terminal device agrees to obtain the distance and/or the angle between the first terminal device and the second terminal device.

Optionally, in this implementation, the local policy may be a list of devices that are not allowed to perform measurement or obtain a measurement result between the second terminal device and another terminal device (including but not limited to the first terminal device). When the first terminal device indicated by the identifier of the first terminal device is a device in the list of devices, the second terminal device disagrees to obtain the distance and/or the angle between the first terminal device and the second terminal device.

Optionally, in this implementation, the local policy may be an identifier list of devices that are allowed to perform measurement or obtain a measurement result between the second terminal device and another terminal device (including but not limited to the first terminal device). When the identifier of the first terminal device is an identifier in the identifier list, the second terminal device agrees to obtain the distance and/or the angle between the first terminal device and the second terminal device.

Optionally, in this implementation, the local policy may be an identifier list of devices that are not allowed to perform measurement or obtain a measurement result between the second terminal device and another terminal device (including but not limited to the first terminal device). When the identifier of the first terminal device is an identifier in the identifier list, the second terminal device disagrees to obtain the distance and/or the angle between the first terminal device and the second terminal device.

In still another possible implementation, the second terminal device may determine a measurement and calculation process based on the fifth indication information (for example, the measurement role information #1) and/or measurement algorithm information carried in the first request message, to learn that the first terminal device is to obtain the distance and/or the angle between the first terminal device and the second terminal device.

In this implementation, the second terminal device may determine, according to a local policy, whether to allow the first terminal device to obtain the distance and/or the angle between the first terminal device and the second terminal device.

If the local policy indicates that the first terminal device is allowed to obtain the measurement result, the second terminal device agrees to obtain the distance and/or the angle between the first terminal device and the second terminal device; otherwise, the second terminal device disagrees to obtain the distance and/or the angle between the first terminal device and the second terminal device.

Optionally, in this implementation, the local policy may be a list of devices that are allowed to perform measurement or obtain a measurement result between the second terminal device and another terminal device (including but not limited to the first terminal device). When the first terminal device is a device in the list of devices, the second terminal device allows the first terminal device to obtain the distance and/or the angle between the first terminal device and the second terminal device.

It should be understood that the foregoing several implementations are merely examples for describing implementations in which the second terminal device determines whether to agree to obtain the distance and/or the angle between the first terminal device and the second terminal device, and do not constitute any limitation on the protection scope of this application. Another possible manner in which the second terminal device determines whether to agree to obtain the distance and/or the angle between the first terminal device and the second terminal device also fall within the protection scope of this application. This embodiment mainly relates to a case in which after receiving the measurement request, the second terminal device determines, based on some information, whether to agree to obtain the distance and/or the angle between the first terminal device and the second terminal device, instead of directly performing a subsequent measurement procedure. In this way, information leakage of the second terminal device that is caused because the measurement procedure is performed when the second terminal device disagrees on the measurement can be avoided.

In addition, it should be noted that the example in which the second terminal device determines, based on the first information, whether to agree to obtain the distance and/or the angle between the first terminal device and the second terminal device is used above. In this embodiment, the second terminal device may alternatively determine, in another manner, whether to agree to obtain the distance and/or the angle between the first terminal device and the second terminal device.

For example, the second terminal device may determine, based on the fifth indication information included in the first request message, whether to agree to obtain the distance and/or the angle between the first terminal device and the second terminal device. When the second terminal device disagrees to content indicated by the fifth indication information, the second terminal device may also disagree to obtain the distance and/or the angle between the first terminal device and the second terminal device.

For another example, when the first request message does not carry the first information, the second terminal device may disagree to obtain the distance and/or the angle between the first terminal device and the second terminal device.

Optionally, the second terminal device determines second indication information based on a privacy protection policy of the second terminal device and/or a capability of the second terminal device, where the second indication information indicates that a measurement result calculating device is the first terminal device or the second terminal device.

In a possible implementation, the second indication information may be measurement role information #2. When a measurement role of a device in a measurement process is a reference UE, it may be understood that the device is a measurement result calculating device. Therefore, the measurement result calculating device may be indicated by indicating the measurement role.

For example, when the privacy protection policy of the second terminal device is that the first terminal device is allowed to obtain a ranging measurement report or a measurement result, the second indication information indicates that the second terminal device is a reference UE or a target UE; or when the privacy protection policy of the second terminal device is that the first terminal device is not allowed to obtain a ranging measurement report or a measurement result, the second indication information indicates that the second terminal device is a reference UE.

For example, the measurement role information #2 indicates a measurement role (the reference UE or the target UE) of the first terminal device in the measurement process, and indicates a measurement role (the reference UE or the target UE) of the second terminal device in the measurement process.

In another possible implementation, the second indication information may be information indicating the measurement result calculating device, and the information indicating the measurement result calculating device indicates that the first terminal device is the measurement result calculating device or indicates that the second terminal device is the measurement result calculating device.

For example, when the privacy protection policy of the second terminal device is that the first terminal device is allowed to obtain a ranging measurement report or a measurement result, the second indication information indicates that the measurement result calculating device is the second terminal device or the first terminal device; or when the privacy protection policy of the second terminal device is that the first terminal device is not allowed to obtain a ranging measurement report or a measurement result, the second indication information indicates that the measurement result calculating device is the second terminal device.

It should be understood that the two implementations are merely examples for describing possible implementations of the second indication information, and do not constitute any limitation on the protection scope of this application. Other information that can indicate the measurement result calculating device or the measurement role falls within the protection scope of this application.

It should be further understood that content indicated by the second indication information determined by the second terminal device and the content indicated by the fifth indication information included in the first request message may be different or may be the same. The following describes in detail a case in which the content indicated by the second indication information determined by the second terminal device and the content indicated by the fifth indication information included in the first request message are the same or different. Details are not described herein again.

Optionally, when the second terminal device disagrees to obtain the distance and/or the angle between the first terminal device and the second terminal device, the second terminal device may return a reject message to the first terminal device.

For example, if the first information is the identifier of the first device, and the second terminal device determines, according to the local policy, to disagree to send the measurement result to the first device, the second terminal device disagrees to obtain the distance and/or the angle between the first terminal device and the second terminal device.

For another example, if the first information is the purpose information, and the second terminal device determines, according to the local policy, to disagree that the measurement result is used for the use purpose indicated by the purpose information, the second terminal device disagrees to obtain the distance and/or the angle between the first terminal device and the second terminal device.

For another example, if the first information is the identifier of the first terminal device, and the second terminal device determines, according to the local policy, to disagree that the first terminal device performs the measurement or obtains the measurement result, the second terminal device disagrees to obtain the distance and/or the angle between the first terminal device and the second terminal device.

For another example, if the second terminal device disagrees on the content indicated by the fifth indication information in the first request message, the second terminal device disagrees to obtain the distance and/or the angle between the first terminal device and the second terminal device.

It can be learned from the foregoing descriptions that the second terminal device may notify the first terminal device of whether the second terminal device agrees or disagrees to obtain the distance and/or the angle between the first terminal device and the second terminal device. In other words, after determining whether to agree to obtain the distance and/or the angle between the first terminal device and the second terminal device, the second terminal device may notify the first terminal device by using a first response message. The method procedure shown in FIG. 7 further includes:
S730: The second terminal device sends the first response message to the first terminal device, in other words, the first terminal device receives the first response message from the second terminal device.

Specifically, the first response message includes first indication information, the first indication information indicates a determining result (or a judging result) of the second terminal device, and the determining result includes whether obtaining of the distance and/or the angle between the first terminal device and the second terminal device is agreed on.

It may be understood that, in this embodiment, the second terminal device may determine, based on the first information carried in the first request message, whether to agree to the content requested by using the first request message, obtain a determining result, and notify the first terminal device of the determining result by using the first indication information.

For example, if the second terminal device determines, based on the first information, to disagree to obtain the distance and/or the angle between the first terminal device and the second terminal device, the determining result obtained by the second terminal device is that the second terminal device disagrees to obtain the distance and/or the angle between the first terminal device and the second terminal device, and the determining result is indicated by the first indication information.

For another example, if the second terminal device determines, based on the first information, to agree to obtain the distance and/or the angle between the first terminal device and the second terminal device, the determining result obtained by the second terminal device is that the second terminal device agrees to obtain the distance and/or the angle between the first terminal device and the second terminal device, and the determining result is indicated by the first indication information.

In a possible implementation, if the second terminal device determines to agree to obtain the distance and/or the angle between the first terminal device and the second terminal device, the first indication information indicates that the second terminal device agrees to obtain the distance and/or the angle between the first terminal device and the second terminal device.

In this implementation, the first response message further includes the foregoing second indication information, and the second indication information indicates that the measurement result calculating device is the first terminal device or the second terminal device.

In addition, it should be noted that, when the first response message does not carry the second indication information, the first terminal device can obtain the measurement result by default; and when the second terminal device disagrees to share the measurement result with the first terminal device, the first terminal device is rejected to obtain the measurement result.

Optionally, the second indication information indicates the measurement role of the second terminal device and the measurement role of the first terminal device, or the second indication information indicates that the measurement result calculating device is the first terminal device or the second terminal device.

For example, the fifth indication information included in the first request message is the measurement role information #1, indicating the measurement role of the first terminal device and the measurement role of the second terminal device that are expected by the first terminal device; and the second indication information included in the first response message is the measurement role information #2, indicating the measurement role of the first terminal device and the measurement role of the second terminal device that are expected by the second terminal device. When the measurement roles indicated by the measurement role information #1 are the same as the measurement roles indicated by the measurement role information #2, it indicates that the measurement roles indicated by the second indication information meet a requirement of the first terminal device.

For example, the fifth indication information indicates that the second terminal device is the target UE, and the second indication information indicates that the second terminal device is the target UE. In this case, the first terminal device is used as the reference UE to initiate a measurement request.

For example, when the measurement roles indicated by the measurement role information #1 are different from the measurement roles indicated by the measurement role information #2, it indicates that the measurement roles indicated by the second indication information do not meet a requirement of the first terminal device. The first terminal device may determine, according to a local privacy protection policy, whether to accept the measurement roles indicated by the second indication information.

For example, the fifth indication information indicates that the first terminal device is the reference UE, in other words, the second terminal device is the target UE; and the second indication information indicates that the second terminal device is the reference UE, in other words, the first terminal device is the target UE.

Optionally, when the privacy protection policy of the first terminal device is that the second terminal device is allowed to obtain a ranging measurement report or a measurement result, the first terminal device accepts the measurement roles indicated by the second indication information, and the first terminal device sends second information (for example, a notification message #1) to the second terminal device, where the second information carries an accept indication, and the accept indication indicates that the first terminal device accepts the measurement roles indicated by the second indication information.

Optionally, when the privacy protection policy of the first terminal device is that the second terminal device is not allowed to obtain a ranging measurement report or a measurement result, the first terminal device does not accept the measurement roles indicated by the second indication information, and the first terminal device sends second information (for example, a notification message #1) to the second terminal device, where the second information carries a reject indication, and the reject indication indicates that the first terminal device rejects the measurement roles indicated by the second indication information.

For example, when the measurement role indicated by the fifth indication information is the same as the measurement result calculating device that is indicated by the second indication information, it indicates that the measurement result calculating device that is indicated by the second indication information meets a requirement of the first terminal device.

For example, the fifth indication information indicates that the first terminal device is the measurement result calculating device, and the second indication information indicates that the first terminal device is the measurement result calculating device. **In** this case, the first terminal device is used as the measurement result calculating device to perform the measurement.

For example, when the measurement result calculating device that is indicated by the fifth indication information is different from the measurement result calculating device that is indicated by the second indication information, it indicates that the measurement result calculating device that is indicated by the second indication information does not meet a requirement of the first terminal device. The first terminal device determines whether to accept the measurement result calculating device that is indicated by the second indication information.

For example, the fifth indication information indicates that the first terminal device is the measurement result calculating device, and the second indication information indicates that the second terminal device is the measurement result calculating device.

Optionally, when the privacy protection policy of the first terminal device is that the second terminal device is allowed to obtain a ranging measurement report or a measurement result, the first terminal device accepts the measurement result calculating device that is indicated by the second indication information, and the first terminal device sends second information (for example, a notification message #1) to the second terminal device, where the second information carries an accept indication, and the accept indication indicates that the first terminal device accepts the measurement result calculating device that is indicated by the second indication information.

Optionally, when the privacy protection policy of the first terminal device is that the second terminal device is not allowed to obtain the ranging measurement report or the measurement result, the first terminal device does not accept the measurement result calculating device that is indicated by the second indication information, and the first terminal device sends second information (for example, a notification message #1) to the second terminal device, where the second information carries a reject indication, and the reject indication indicates that the first terminal device rejects the measurement result calculating device that is indicated by the second indication information.

In another possible implementation, if the second terminal device determines to disagree to obtain the distance and/or the angle between the first terminal device and the second terminal device, the first indication information indicates that the second terminal device disagrees to obtain the distance and/or the angle between the first terminal device and the second terminal device.

In this implementation, the first response message further includes a cause value, and the cause value indicates a cause why the second terminal device disagrees to obtain the distance and/or the angle between the first terminal device and the second terminal device.

Optionally, the cause value indicates a purpose of disagreeing. For example, the cause value indicates that the second terminal device disagrees to send a measurement result to the first device. For another example, the cause value indicates that the second terminal device disagrees on the measurement result use purpose. For another example, the cause value indicates that the second terminal device does not allow the first terminal device to perform the measurement or obtain the measurement result.

Optionally, the cause value may be represented by using at least one bit, or may be represented by using a character string. An implementation of the cause value is not limited in this embodiment.

In addition, it should be noted that, when the first response message does not carry the first indication information, it may be understood that the second terminal device disagrees to obtain the distance and/or the angle between the first terminal device and the second terminal device.

It may be understood that, in the foregoing steps S710 and S730, the first terminal device and the second terminal device may negotiate to determine the measurement result calculating device (or the reference UE), and either of the second terminal device and the first terminal device that participate in the measurement may be used as the measurement result calculating device (or the reference UE) to perform the measurement procedure. The following separately describes two manners: The first terminal device is used as the measurement result calculating device (or the reference UE), and the second terminal device is used as the measurement result calculating device (or the reference UE).

Manner 1: The first terminal device is used as the measurement result calculating device (or the reference UE) to perform the measurement procedure.

In the manner 1, the first terminal device performs the measurement to obtain the measurement result, and send the measurement result to the first device. The method procedure shown in FIG. 7 further includes:
S741: The first terminal device sends a second response message to the first device, in other words, the first device receives the second response message from the first terminal device.

Specifically, the second response message includes the measurement result.

Optionally, in this embodiment, after obtaining the measurement result, the first terminal device may not need to share the measurement result with the second terminal device, to avoid leaking the measurement result to a terminal device that does not need to sense the measurement result.

Manner 2: The second terminal device is used as the measurement result calculating device to perform the measurement procedure.

In the manner 2, the second terminal device performs the measurement to obtain the measurement result, and send the measurement result to the first device. The method procedure shown in FIG. 7 further includes:
S742: The second terminal device sends the measurement result or an encrypted measurement result to the first device, in other words, the first device receives the measurement result or the encrypted measurement result from the second terminal device.

For example, the second terminal device sends a notification message to the first device, where the notification message includes the measurement result or the encrypted measurement result.

The encrypted measurement result is encrypted based on a first key, and the first key is a key shared by the second terminal device and the first device.

In a possible implementation, before the second terminal device sends the measurement result, the second terminal device sends a first request message to the first device, where the first request message is used to request to establish a secure connection, and the secure connection is used to transmit the measurement result.

For example, the first device is the third terminal device. If no connection is established between the second terminal device and the third terminal device, the second terminal device sends the first request message (for example, a direct communication request (direct communication request) message), where the first request message carries an identifier of the third terminal device (for example, an ID of the third terminal device), and establishes a secure connection to the third terminal device by using the direct communication request message.

For example, if the third terminal device is not within a communication range of the second terminal device, the second terminal device may select a terminal device-to-terminal device relay (UE-to-UE relay) manner to establish the connection to the third terminal device. For example, the second terminal device sends the direct communication request message, to discover a UE-to-UE relay. The UE-to-UE relay may be a layer 2 relay.

Specifically, when the first device is the third terminal device, that the second terminal device sends the measurement result to the first device includes:
The second terminal device sends a measurement result reporting message to the third terminal device, where the measurement result reporting message carries the measurement result and the identifier of the third terminal device.

It may be understood that, when the first device is the third terminal device, the measurement result reporting message is securely protected by a V2X protocol layer between the second terminal device and the third terminal device.

For another example, the first device is the NF or the AF, and no connection is established between the second terminal device and the AMF. The second terminal device sends a registration request message or a service request message, and establishes a secure connection to the AMF by using the registration request message or the service request message.

For example, if the second terminal device is not in a signal coverage area of a base station, the second terminal device may select a terminal device-to-network device relay (UE-to-network relay) manner to establish the connection to the AMF. For example, the second terminal device sends a direct communication request message, to discover a UE-to-network relay. The UE-to-network relay may be a layer 2 relay.

Specifically, when the first device is the NF or the AF, that the second terminal device sends the measurement result to the first device includes:
The second terminal device sends a measurement result reporting message to the AMF, where the measurement result reporting message carries the measurement result, the identifier of the first device (for example, the identifier of the NF or the AF), and the identifier of the first terminal. The AMF sends the measurement result to the first device.

It may be understood that, when the first device is the NF or the AF, the measurement result reporting message is securely protected by a NAS.

In another possible implementation, before the second terminal device sends the encrypted measurement result, the second terminal device obtains the first key.

For example, the first device is an NF or an AF, and no connection is established between the second terminal device and the AMF. The second terminal device sends a registration request message or a service request message, to complete a registration request or a service request process.

Optionally, the second terminal device establishes a secure transmission channel to the NF or the AF based on an AKMA or GBA security mechanism. The secure transmission channel is used to transmit a ranging result. For the AKMA or GBA security mechanism, refer to the foregoing descriptions in the basic concepts. Details are not described herein again.

Specifically, that the second terminal device establishes a secure transmission channel to the NF or the AF based on an AKMA or GBA security mechanism includes:
The second terminal device generates an AKMA/GBA key and a key identifier. The second terminal device sends an application session establishment request message to the NF or the AF, where the application session establishment request message carries the identifier of the NF or the AF. The second terminal device obtains the first key (for example, an application key) through calculation, the NF or the AF obtains the first key, and performs security protection on the secure transmission channel between the second terminal device and the NF or the AF based on the first key. For example, the second terminal device sends a measurement result reporting message to the NF or the AF, where the measurement result reporting message carries the measurement result encrypted based on the first key and the identifier of the first device (for example, the identifier of the NF or the AF).

For another example, the first key is a key predefined or preconfigured on the second terminal device.

In the foregoing manner 2, the second terminal device obtains and reports the measurement result, so that the first terminal device can be prevented from obtaining the ranging result, and privacy security of the second terminal device is protected.

Optionally, in the manner 2, the method procedure shown in FIG. 7 further includes:
S743: The second terminal device sends third indication information to the first terminal device.

The third indication information indicates that the measurement result is successfully sent or fails to be sent.

When the measurement result is sent to the first device, the third indication information indicates that the measurement result is successfully sent. When the measurement result is not sent to the first device or the measurement result fails to be sent, the third indication information indicates that the measurement result fails to be sent.

Optionally, in the manner 2, the first terminal device may notify, by using the second response message, the first device that the measurement succeeds or fails. The method procedure shown in FIG. 7 further includes:
S744: The first terminal device sends the second response message to the first device.

For example, the first device is the third terminal device, and the first terminal device sends the second response message to the third terminal device. The second response message includes fourth indication information, and the fourth indication information indicates that the measurement task is successful or fails.

For another example, the first device is the AF or the NF, and the first terminal device sends the second response message to the AF or the NF through the AMF. The second response message includes fourth indication information, and the fourth indication information indicates that the measurement task is successful or fails.

Optionally, when the second terminal device first sends the notification message to the first device, then the first terminal device sends the second response message to the first device (for example, step S742 is performed before step S744), and the measurement result or the encrypted measurement result fails to be sent, the second terminal device sends the third indication information to the first terminal device, where the third indication information indicates that the measurement result fails to be sent, and the first terminal device sends the second response message to the first device, where the second response message carries fourth indication information, indicating that the measurement task fails.

Optionally, when the second terminal device first sends the notification message to the first device, then the first terminal device sends the second response message to the first device (for example, step S742 is performed before step S744), and the measurement result or the encrypted measurement result is successfully sent, the second terminal device sends the third indication information to the first terminal device, where the third indication information indicates that the measurement result is successfully sent, and the first terminal device sends the second response message to the first device, where the second response message carries the fourth indication information, indicating that the measurement task is successful.

Optionally, when the first terminal device first sends the second response message to the first device, and then the second terminal device sends the notification message to the first device (for example, step S742 is performed after step S744), the second response message carries information indicating the second terminal device, for example, carries the identifier of the second terminal device.

For ease of understanding, the communication method shown in FIG. 7 is described with reference to specific examples.

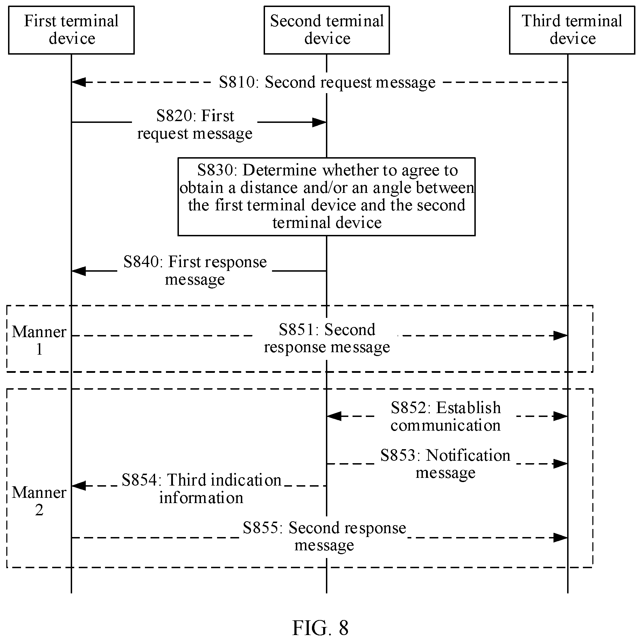

Example 1: The first device is the third terminal device. Descriptions are provided with reference to FIG. 8.

FIG. 8 is a schematic flowchart of another communication method according to an embodiment of this application. The method includes the following steps.

S810: The third terminal device sends a second request message to the first terminal device.

Refer to the descriptions of step S711 in FIG. 7. Details are not described herein again.

S820: The first terminal device sends a first request message to the second terminal device.

Refer to the descriptions of step S710 in FIG. 7. Details are not described herein again.

S830: The second terminal device determines whether to agree to obtaining of a distance and/or an angle between the first terminal device and the second terminal device.

Refer to the descriptions of step S720 in FIG. 7. Details are not described herein again.

S840: The second terminal device sends a first response message to the first terminal device.

Refer to the descriptions of step S730 in FIG. 7. Details are not described herein again.

Further, the method procedure shown in FIG. 8 further includes step S851, or includes steps S852, S853, and S854.

S851: The first terminal device sends a second response message to the third terminal device.

Refer to the descriptions of step S741 in FIG. 7. Details are not described herein again.

A secure connection needs to be established between the second terminal and the third terminal device. The method procedure shown in FIG. 8 further includes the following steps.

S852: The second terminal device establishes communication with the third terminal device.

For example, the second terminal device sends an announcement message or a solicitation message, to discover the third terminal device. After the discovery is completed, the second terminal device establishes a connection to the third terminal device by using a direct communication request message, and negotiates a security parameter with the third terminal device, to establish the secure connection between the second terminal device and the third terminal device.

For example, the second terminal device sends an announcement message or a solicitation message, to discover the third terminal device. When the third terminal device cannot be discovered, the second terminal device selects a relay device, establishes a connection to the third terminal device, and negotiates a security parameter with the third terminal device, to establish the secure connection between the second terminal device and the third terminal device.

S853: The second terminal device sends a notification message to the third terminal device.

Refer to the descriptions of step S742 in FIG. 7. Details are not described herein again.

S854: The second terminal device sends third indication information to the first terminal device.

Refer to the descriptions of step S743 in FIG. 7. Details are not described herein again.

S855: The first terminal device sends a second response message to the third terminal device.

Refer to the descriptions of step S744 in FIG. 7. Details are not described herein again.

It should be understood that the third terminal device in the embodiment shown in FIG. 8 is optional, in other words, may be a measurement procedure initiated by the first terminal device.

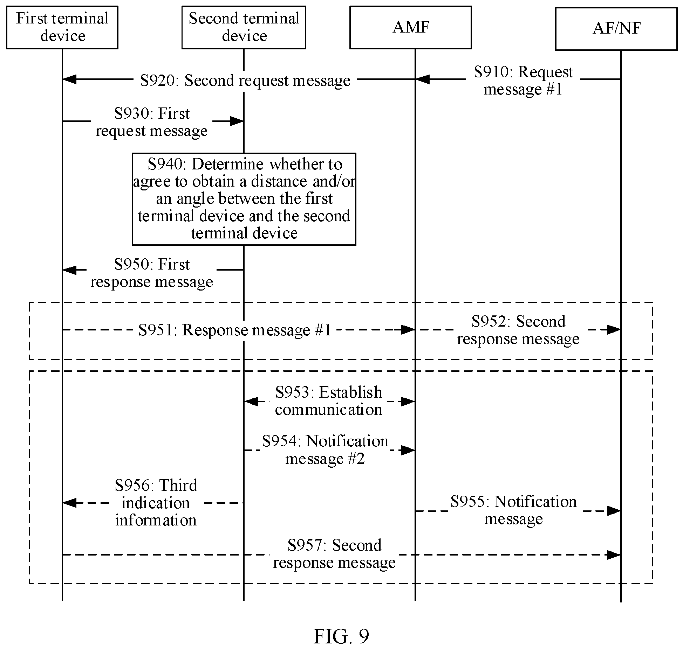

Example 2: The first device is the AF or the NF, and a secure connection is established between the second terminal device and the AF or the NF. Descriptions are provided with reference to FIG. 9.

FIG. 9 is a schematic flowchart of another communication method according to an embodiment of this application. The method includes the following steps.

S910: The AF or the NF sends a request message #1 to the AMF.

The request message #1 is used to request to measure a distance and/or an angle between the first terminal device and the second terminal device. After receiving the request message #1, the AMF may send, to the first terminal device, a second request message used to request to measure the distance and/or the angle between the first terminal device and the second terminal device.

S920: The AMF sends the second request message to the first terminal device.

The second request message is a NAS message. Specifically, for content included in the NAS message, refer to the descriptions of the content included in the second request message in step S711 in FIG. 7. Details are not described herein again.

S930: The first terminal device sends a first request message to the second terminal device.

Refer to the descriptions of step S710 in FIG. 7. Details are not described herein again.

S940: The second terminal device determines whether to agree to obtain the distance and/or the angle between the first terminal device and the second terminal device.

Refer to the descriptions of step S720 in FIG. 7. Details are not described herein again.

S950: The second terminal device sends a first response message to the first terminal device.

Refer to the descriptions of step S730 in FIG. 7. Details are not described herein again.

Further, the method procedure shown in FIG. 9 further includes steps S951 and S952, or includes steps S953 to S957.

Specifically, that the first terminal device sends a second response message to the first device in step S741 in FIG. 7 may be understood as that the first terminal device first sends a response message #1 to the AMF, and then the AMF sends the second response message to the AF or the NF. To be specific, the following steps are included:
S951: The first terminal device sends the response message #1 to the AMF.

The response message #1 includes a measurement result.

S952: The AMF sends the second response message to the AF or the NF.

The second response message includes the measurement result.

Specifically, that the second terminal device sends a notification message to the first device in step S742 in FIG. 7 may be understood as that the second terminal device first sends a notification message #2 to the AMF, and then the AMF sends the notification message to the AF or the NF, and a secure connection needs to be established between the second terminal device and the AMF. To be specific, the following steps are included:
S953: The second terminal device establishes communication with the AMF.

For example, a registration request procedure or a service request procedure is performed between the second terminal device and the AMF, to establish a communication connection.

For example, the second terminal device sends a registration request message or a service request message to the AMF, to establish or restore the connection between the second terminal device and the AMF. When the second terminal device is in a connected mode, this step is skipped.

In response to the registration request message or the service request message, the AMF interacts with a core network element to obtain a security context of the second terminal device, and sends a message to the second terminal device to activate the security context of the second terminal device. The second terminal device establishes the secure connection to the AMF.

After the communication connection between the second terminal device and the AMF is established, in S954, the second terminal device sends a notification message #2 to the AMF.

The notification message #2 includes a measurement result.

S955: The AMF sends the notification message to the AF or the NF.

The notification message includes the measurement result.

S956: The second terminal device sends third indication information to the first terminal device.

Refer to the descriptions of step S743 in FIG. 7. Details are not described herein again.

S957: The first terminal device sends a second response message to the AF or the NF.

Refer to the descriptions of step S744 in FIG. 7. Details are not described herein again.

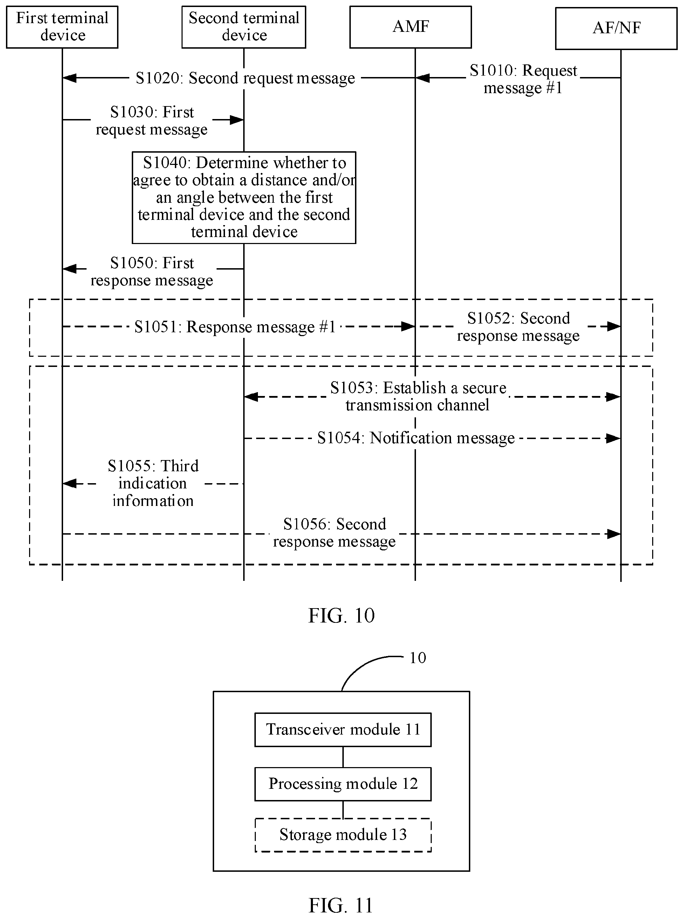

Example 3: The first device is the AF or the NF, and security protection is performed on a security channel between the second terminal device and the AF or the NF. Descriptions are provided with reference to FIG. 10.

FIG. 10 is a schematic flowchart of another communication method according to an embodiment of this application. The method includes the following steps.

S1010: The AF or the NF sends a request message #1 to the AMF.

S1020: The AMF sends a second request message to the first terminal device.

S1030: The first terminal device sends a first request message to the second terminal device.

S1040: The second terminal device determines whether to agree to obtaining of a distance and/or an angle between the first terminal device and the second terminal device.

S1050: The second terminal device sends a first response message to the first terminal device.

For steps S1010 to S1050, refer to the descriptions of steps S910 to S950 in FIG. 9. Details are not described herein again.

Further, the method procedure shown in FIG. 10 further includes steps S1051 and S1052, or includes steps S1053 to S1056.

Specifically, that the first terminal device sends a second response message to the first device in step S741 in FIG. 7 may be understood as that the first terminal device first sends a response message #1 to the AMF, and then the AMF sends the second response message to the AF or the NF. To be specific, the following steps are included:
S1051: The first terminal device sends the response message #1 to the AMF.

The response message #1 includes a measurement result.

S1052: The AMF sends the second response message to the AF or the NF.

The second response message includes the measurement result.

Specifically, that the second terminal device sends a notification message to the first device in step S742 in FIG. 7 may be understood as that the second terminal device first establishes a secure transmission channel to the AF or the NF, and then the second terminal device sends the notification message to the AF or the NF. To be specific, the following steps are included:
S1053: The second terminal device establishes the secure transmission channel to the NF or the AF.

For example, a registration request procedure or a service request procedure is performed between the second terminal device and the AMF, to establish a communication connection.

For example, the second terminal device sends a registration request message or a service request message to the AMF, to establish or restore the connection between the second terminal device and the AMF. When the second terminal device is in a connected mode, this step is skipped.

In response to the registration request message or the service request message, the AMF interacts with a core network element to obtain a security context of the second terminal device, and sends a message to the second terminal device to activate the security context of the second terminal device. The second terminal device establishes a secure connection to the AMF.

The second terminal device sends a session establishment request to the AMF, to establish a user plane transmission channel between the second terminal device and the NF or the AF. After receiving a session establishment success message, the second terminal device sends an application session establishment request message to the NF or the AF. The application session establishment request message carries an identifier of the NF or the AF. The second terminal device performs security protection on a secure channel between the second terminal device and the NF or the AF based on a first key. The first key may be preconfigured, or the first key (for example, an application key) may be obtained by the second terminal device through calculation. This is not limited herein.

S1054: The second terminal device sends a notification message to the NF or the AF.

The notification message includes an encrypted measurement result. The second terminal device and the AF or the NF may interact with each other through a user plane.

S1055: The second terminal device sends third indication information to the first terminal device.

Refer to the descriptions of step S743 in FIG. 7. Details are not described herein again.

S1056: The first terminal device sends a second response message to the AF or the NF.

Refer to the descriptions of step S744 in FIG. 7. Details are not described herein again.

It should be understood that sequence numbers of the foregoing processes do not mean execution sequences. The execution sequence of the processes should be determined based on functions and internal logic of the processes, and should not constitute any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device (for example, the network device or the terminal device) in an existing network architecture is mainly used as an example for description. It should be understood that a specific form of the device is not limited in embodiments of this application. For example, all devices that can implement a same function in the future are applicable to embodiments of this application.

It may be understood that in the foregoing method embodiments, the methods and operations implemented by the network device may alternatively be implemented by a component that may be used in the network device, and the methods and operations implemented by the terminal device may alternatively be implemented by a component that may be used in the terminal device.

The foregoing describes in detail, with reference to FIG. 7, the communication method provided in embodiments of this application. The foregoing communication method is mainly described from a perspective of interaction between terminal devices. It may be understood that, to implement the foregoing function, the terminal device includes a corresponding hardware structure and/or software module for performing the function.

A person skilled in the art should be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for the particular application, but it should not be considered that the implementation goes beyond the scope of this application.

The following describes, in detail with reference to FIG. 11 to FIG. 13, communication apparatuses provided in embodiments of this application. It should be understood that descriptions of apparatus embodiments correspond to the descriptions of the method embodiments. Therefore, for content that is not described in detail, refer to the method embodiments above. For brevity, details of a part of content are not described herein again.

In embodiments of this application, a transmit-end device or a receive-end device may be divided into functional modules based on the foregoing method examples. For example, the transmit-end device or the receive-end device may be divided into functional modules corresponding to functions, or two or more functions may be integrated into one processing module. The integrated module may be implemented in a form of hardware, or may be implemented in a form of a software functional module. It should be noted that, in embodiments of this application, module division is an example, and is merely logical function division. In an actual implementation, another division manner may be used. Descriptions are provided below by using an example in which each functional module is obtained through division based on each corresponding function.

FIG. 11 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. In other words, the transceiver module 11 is configured to perform receiving and sending related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device or the network element in the foregoing method embodiments.

In a first design, the apparatus 10 may correspond to the first terminal device in the foregoing method embodiments, or may be a component (for example, a chip) of the first terminal device.

The apparatus 10 may implement steps or procedures performed by the first terminal device in the foregoing method embodiments. The transceiver module 11 may be configured to perform receiving and sending related operations of the first terminal device in the foregoing method embodiments. The processing module 12 may be configured to perform processing related operations of the first terminal device in the foregoing method embodiments.

In a possible implementation, the transceiver module 11 is configured to send a first request message to a second terminal device, where the first request message is used to request to obtain a distance and/or an angle between the communication apparatus and the second terminal device, the first request message includes first information, and the first information is used by the second terminal device to determine whether to agree to obtain the distance and/or the angle between the first terminal device and the second terminal device.

The transceiver module 11 is configured to receive a first response message from the second terminal device, where the first response message includes first indication information, and the first indication information indicates whether the second terminal device agrees to obtain the distance and/or the angle between the first terminal device and the second terminal device.

When the apparatus 10 is configured to perform the method in FIG. 7, the transceiver module 11 may be configured to perform steps of sending information in the method, for example, steps S711, S710, S730, and S741; and the processing module 12 may be configured to perform the processing step in the method.

It should be understood that a specific process in which the units perform the foregoing corresponding steps is described in detail in the foregoing method embodiments. For brevity, details are not described herein again.

In a second design, the apparatus 10 may correspond to the second terminal device in the foregoing method embodiments, or may be a component (for example, a chip) of the second terminal device.

The apparatus 10 may implement steps or procedures performed by the second terminal device in the foregoing method embodiments. The transceiver module 11 may be configured to perform receiving and sending related operations of the second terminal device in the foregoing method embodiments. The processing module 12 may be configured to perform processing related operations of the second terminal device in the foregoing method embodiments.

In a possible implementation, the transceiver module 11 is configured to receive a first request message from a first terminal device, where the first request message is used to request to obtain a distance and/or an angle between the first terminal device and the communication apparatus, and the first request message includes first information.

The processing module 12 is configured to determine, based on the first information, whether to agree to obtain the distance and/or the angle between the first terminal device and the second terminal device.

The transceiver module 11 is configured to send a first response message to the first terminal device, where the first response message includes first indication information, the first indication information indicates whether the communication apparatus agrees to obtain the distance and/or the angle between the first terminal device and the second terminal device.

When the apparatus 10 is configured to perform the method in FIG. 7, the transceiver module 11 may be configured to perform steps of receiving and sending information in the method, for example, steps S710, S730, and S742; and the processing module 12 may be configured to perform the processing step in the method, for example, step S720.

It should be understood that a specific process in which the units perform the foregoing corresponding steps is described in detail in the foregoing method embodiments. For brevity, details are not described herein again.

In a third design, the apparatus 10 may correspond to the first device in the foregoing method embodiments, or may be a component (for example, a chip) of the first device.

The apparatus 10 may implement a corresponding step or procedure performed by the first device in the foregoing method embodiments. The transceiver module 11 may be configured to perform receiving and sending related operations of the first device in the foregoing method embodiments. The processing module 12 may be configured to perform a processing related operation of the first device in the foregoing method embodiments.

In a possible implementation, the transceiver module 11 is configured to send a second request message to a first terminal device, where the second request message is used to request to measure a distance and/or an angle between the first terminal device and a second terminal device, the second request message includes first information, and the first information is used by the second terminal device to determine whether to agree on the measurement requested by using the second request message.

The transceiver module 11 is further configured to receive at least one of the following information: a measurement result, an encrypted measurement result, or fourth indication information, where the fourth indication information indicates that the measurement succeeds or fails, where the encrypted measurement result is encrypted based on a first key, and the first key is a key shared by the second terminal device and the communication apparatus.

When the apparatus 10 is configured to perform the method in FIG. 7, the transceiver module 11 may be configured to perform steps of receiving and sending information in the method, for example, steps S711, S741, and S742; and the processing module 12 may be configured to perform the processing step in the method.

It should be understood that a specific process in which the units perform the foregoing corresponding steps is described in detail in the foregoing method embodiments. For brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing a corresponding step performed by a device (for example, the first terminal device, the second terminal device, or the first device) in the foregoing method. The function may be implemented by hardware, or may be implemented by hardware executing corresponding software. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform receiving and sending operations and processing related operations in the method embodiments.

In addition, the transceiver module 11 may alternatively be a transceiver circuit (for example, may include a receiving circuit and a sending circuit), and the processing module may be a processing circuit.

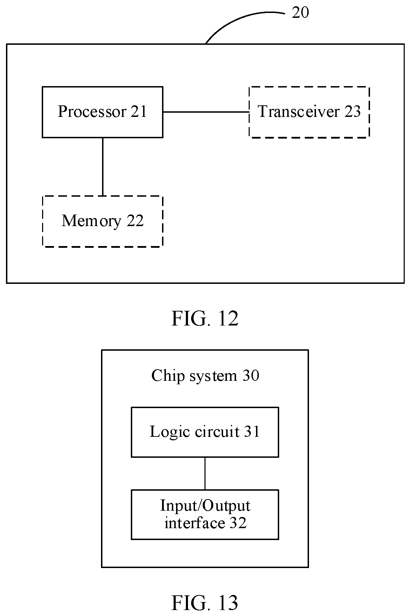

FIG. 12 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 12, the apparatus 20 further includes the memory 22, and the memory 22 is configured to store the computer program or instructions and/or data. The memory 22 and the processor 21 may be integrated together, or may be separately disposed. Optionally, there are one or more memories 22.

Optionally, as shown in FIG. 12, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement the operations performed by the first terminal device in the foregoing method embodiments.

In another solution, the apparatus 20 is configured to implement the operations performed by the second terminal device in the foregoing method embodiments.

In another solution, the apparatus 20 is configured to implement the operations performed by the first device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

FIG. 13 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement the operations performed by the first terminal device in the foregoing method embodiments.

For example, the logic circuit 31 is configured to implement processing related operations performed by the first terminal device in the foregoing method embodiments, and the input/output interface 32 is configured to implement sending and/or receiving related operations performed by the first terminal device in the foregoing method embodiments.

In another solution, the chip system 30 is configured to implement the operations performed by the second terminal device in the foregoing method embodiments.

For example, the logic circuit 31 is configured to implement processing related operations performed by the second terminal device in the foregoing method embodiments, and the input/output interface 32 is configured to implement sending and/or receiving related operations performed by the second terminal device in the foregoing method embodiments.

In another solution, the chip system 30 is configured to implement the operations performed by the first device in the foregoing method embodiments.

For example, the logic circuit 31 is configured to implement processing related operations performed by the first device in the foregoing method embodiments, and the input/output interface 32 is configured to implement sending and/or receiving related operations performed by the first device in the foregoing method embodiments.

An embodiment of this application further provides a computer-readable storage medium. The computer-readable storage medium stores computer instructions for implementing the method performed by the device in the foregoing method embodiments.

For example, when the computer program is executed by a computer, the computer is enabled to implement the method performed by the first terminal device, the second terminal device, or the first device in the foregoing method embodiments.

An embodiment of this application further provides a computer program product, including instructions. When the instructions are executed by a computer, the method performed by the device (for example, the first terminal device, the second terminal device, or the first device) in the foregoing method embodiments is implemented.

An embodiment of this application further provides a communication system, including the foregoing first terminal device, second terminal device, and first device.

For descriptions of related content and beneficial effects of any apparatus provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first terminal device, a first request message to a second terminal device, wherein the first request message is used to request to obtain a distance and/or an angle between the first terminal device and the second terminal device, the first request message comprises first information, and the first information is used by the second terminal device to determine whether to agree to obtain the distance and/or the angle between the first terminal device and the second terminal device; and
receiving, by the first terminal device, a first response message from the second terminal device, wherein the first response message comprises first indication information, the first indication information indicates a determining result of the second terminal device, and the determining result comprises whether obtaining of the distance and/or the angle between the first terminal device and the second terminal device is agreed on.

2. The method according to claim 1, wherein before the sending, by a first terminal device, a first request message to a second terminal device, the method further comprises:
receiving, by the first terminal device, a second request message from a first device, wherein the second request message is used to request to measure the distance and/or the angle between the first terminal device and the second terminal device, and the second request message comprises the first information.

3. The method according to claim 1 or 2, wherein the first information comprises an identifier of the first device and/or purpose information indicating a measurement result use purpose.

4. The method according to any one of claims 1 to 3, wherein when the determining result is that the second terminal device disagrees to obtain the distance and/or the angle between the first terminal device and the second terminal device, the first response message further comprises a cause value, and the cause value indicates a cause why the second terminal device disagrees to obtain the distance and/or the angle between the first terminal device and the second terminal device.

5. The method according to claim 4, wherein the cause value indicates that the second terminal device disagrees to send a measurement result to the first device, and/or the cause value indicates that the second terminal device disagrees on a use purpose of the measurement result.

6. The method according to any one of claims 1 to 5, wherein when the determining result is that the second terminal device agrees to obtain the distance and/or the angle between the first terminal device and the second terminal device, the first response message further comprises second indication information, and the second indication information indicates that a measurement result calculating device is the first terminal device or the second terminal device; and
the method further comprises:
determining, by the first terminal device according to a privacy protection policy of the first terminal device, whether to agree on content indicated by the second indication information.

7. The method according to claim 6, wherein when the second indication information indicates that the second terminal device is the measurement result calculating device,
the determining, by the first terminal device according to a privacy protection policy of the first terminal device, whether to agree on content indicated by the second indication information comprises:
when the privacy protection policy of the first terminal device is that the second terminal device is allowed to obtain a measurement result, determining, by the first terminal device, to agree that the second terminal device is used as the measurement result calculating device; or
when the privacy protection policy of the first terminal device is that the second terminal device is not allowed to obtain a measurement result, determining, by the first terminal device, to disagree that the second terminal device is used as the measurement result calculating device.

8. The method according to claim 6 or 7, wherein the second indication information comprises role information indicating a measurement role of the second terminal device.

9. The method according to claim 8, wherein when the role information indicates that the second terminal device is a reference terminal device,
the determining, by the first terminal device according to a privacy protection policy of the first terminal device, whether to agree on content indicated by the second indication information comprises:
when the privacy protection policy of the first terminal device is that the second terminal device is allowed to obtain a measurement result, determining, by the first terminal device, to agree that the second terminal device is used as the reference terminal device; or
when the privacy protection policy of the first terminal device is that the second terminal device is not allowed to obtain a measurement result, determining, by the first terminal device, to disagree that the second terminal device is used as the reference terminal device.

10. The method according to any one of claims 6 to 9, wherein the method further comprises:
sending, by the first terminal device, second information to the second terminal device, wherein the second information indicates whether the content indicated by the second indication information is agreed on.

11. The method according to any one of claims 1 to 10, wherein when the first terminal device obtains a measurement result by performing measurement, the first terminal device determines not to send the measurement result to the second terminal device; and the method further comprises:
sending, by the first terminal device, a second response message to the first device, wherein the second response message comprises the measurement result.

12. The method according to any one of claims 1 to 10, wherein when the second terminal device obtains a measurement result by performing measurement, the method further comprises:
receiving, by the first terminal device, third indication information from the second terminal device, wherein the third indication information indicates that the measurement result is successfully sent or fails to be sent; and
sending, by the first terminal device, a second response message to the first device, wherein the second response message comprises fourth indication information, and the fourth indication information indicates that the measurement succeeds or fails.

13. A communication method, comprising:
receiving, by a second terminal device, a first request message from a first terminal device, wherein the first request message is used to request to obtain a distance and/or an angle between the first terminal device and the second terminal device, and the first request message comprises first information;
determining, by the second terminal device based on the first information, whether to agree to obtain the distance and/or the angle between the first terminal device and the second terminal device; and
sending, by the second terminal device, a first response message to the first terminal device, wherein the first response message comprises first indication information, the first indication information indicates a determining result of the second terminal device, and the determining result comprises whether obtaining of the distance and/or the angle between the first terminal device and the second terminal device is agreed on.

14. The method according to claim 13, wherein the first information comprises an identifier of a first device and/or purpose information indicating a measurement result use purpose.

15. The method according to claim 14, wherein when the first information comprises the identifier of the first device,
the determining, by the second terminal device based on the first information, whether to agree to obtain the distance and/or the angle between the first terminal device and the second terminal device comprises:
determining, by the second terminal device based on the identifier of the first device and a local policy, whether to agree to obtain the distance and/or the angle between the first terminal device and the second terminal device; and
if the local policy indicates that a measurement result is allowed to be sent to the first device, agreeing, by the second terminal device, to obtain the distance and/or the angle between the first terminal device and the second terminal device; or if the local policy indicates that a measurement result is not allowed to be sent to the first device, disagreeing, by the second terminal device, to obtain the distance and/or the angle between the first terminal device and the second terminal device.

16. The method according to claim 14 or 15, wherein when the first information comprises the purpose information,
determining, by the second terminal device based on the first information, whether to agree on a measurement request comprises:
determining, by the second terminal device based on the purpose information and a local policy, whether to agree to obtain the distance and/or the angle between the first terminal device and the second terminal device; and
if the local policy indicates that a measurement result is allowed to be used for the measurement result use purpose indicated by the purpose information, agreeing, by the second terminal device, on the measurement request; or if the local policy indicates that a measurement result is not allowed to be used for the measurement result use purpose indicated by the purpose information, disagreeing, by the second terminal device, on the measurement request.

17. The method according to any one of claims 13 to 16, wherein when the second terminal device agrees to obtain the distance and/or the angle between the first terminal device and the second terminal device, the method further comprises:
determining, by the second terminal device, second indication information according to a privacy protection policy of the second terminal device, wherein the second indication information indicates that a measurement result calculating device is the first terminal device or the second terminal device; and
the first response message further comprises the second indication information.

18. The method according to claim 17, wherein when the privacy protection policy of the second terminal device is that the first terminal device is allowed to obtain a measurement result, the second indication information indicates that the measurement result calculating device is the first terminal device; or
when the privacy protection policy of the second terminal device is that the first terminal device is not allowed to obtain a measurement result, the second indication information indicates that the measurement result calculating device is the second terminal device.

19. The method according to claim 17 or 18, wherein the second indication information comprises role information indicating a measurement role of the second terminal device.

20. The method according to claim 19, wherein when the privacy protection policy of the second terminal device is that the first terminal device is allowed to obtain a measurement result, the role information indicates that the measurement role of the second terminal device is a reference terminal device or a target terminal device; or
when the privacy protection policy of the second terminal device is that the first terminal device is not allowed to obtain a measurement result, the role information indicates that the measurement role of the second terminal device is a reference terminal device.

21. The method according to any one of claims 17 to 20, wherein the method further comprises:
receiving, by the second terminal device, second information from the first terminal device, wherein the second information indicates whether the first terminal device accepts content indicated by the second indication information.

22. The method according to any one of claims 13 to 21, wherein when the second terminal device obtains a measurement result by performing measurement, the second terminal device determines not to send the measurement result to the first terminal device; and the method further comprises:
sending, by the second terminal device, the measurement result or an encrypted measurement result to the first device, wherein
the encrypted measurement result is encrypted based on a first key, and the first key is a key shared by the second terminal device and the first device.

23. The method according to claim 22, wherein before the sending, by the second terminal device, the measurement result, the method further comprises:
sending, by the second terminal device, a first request message to the first device, wherein the first request message is used to request to establish a secure connection, and the secure connection is used to transmit the measurement result.

24. The method according to claim 22, wherein before the sending, by the second terminal device, an encrypted measurement result, the method further comprises:
obtaining, by the second terminal device, the first key.

25. The method according to any one of claims 13 to 24, wherein when the second terminal device disagrees to obtain the distance and/or the angle between the first terminal device and the second terminal device, the first response message further comprises a cause value, and the cause value indicates a cause why the second terminal device disagrees to obtain the distance and/or the angle between the first terminal device and the second terminal device.

26. The method according to claim 25, wherein the cause value indicates that the second terminal device disagrees to send a measurement result to the first device, and/or the cause value indicates that the second terminal device disagrees on a use purpose of the measurement result.

27. A communication method, comprising:
sending, by a first device, a second request message to a first terminal device, wherein the second request message is used to request to measure a distance and/or an angle between the first terminal device and a second terminal device, the second request message comprises first information, and the first information is used by the second terminal device to determine whether to agree on the measurement requested by using the second request message; and
receiving, by the first device, at least one of the following information:
a measurement result, an encrypted measurement result, or fourth indication information, wherein the fourth indication information indicates that the measurement succeeds or fails, wherein
the encrypted measurement result is encrypted based on a first key, and the first key is a key shared by the second terminal device and the first device.

28. The method according to claim 27, wherein the first information comprises an identifier of the first device and/or purpose information indicating a measurement result use purpose.

29. The method according to claim 27 or 28, wherein the receiving, by the first device, a measurement result comprises:
receiving, by the first device, the measurement result from the second terminal device; and
the method further comprises:
receiving, by the first device, a first request from the second terminal device, wherein the first request is used to request to establish a secure connection, and the secure connection is used to transmit the measurement result.

30. The method according to claim 27 or 28, wherein the receiving, by the first device, an encrypted measurement result comprises:
receiving, by the first device, the encrypted measurement result from the second terminal device; and
the method further comprises:
obtaining, by the first device, the first key.

31. A communication method, comprising:
sending, by a first terminal device, a first request message to a second terminal device, wherein the first request message is used to request to obtain a distance and/or an angle between the first terminal device and the second terminal device, the first request message comprises first information, and the first information is used by the second terminal device to determine whether to agree to obtain the distance and/or the angle between the first terminal device and the second terminal device;
determining, by the second terminal device based on the first information, whether to agree to obtain the distance and/or the angle between the first terminal device and the second terminal device; and
sending, by the second terminal device, a first response message to the first terminal device, wherein the first response message comprises first indication information, the first indication information indicates a determining result of the second terminal device, and the determining result comprises whether obtaining of the distance and/or the angle between the first terminal device and the second terminal device is agreed on.

32. A communication apparatus, wherein the apparatus comprises:
a sending unit, configured to send a first request message to a second terminal device, wherein the first request message is used to request to obtain a distance and/or an angle between the communication apparatus and the second terminal device, the first request message comprises first information, and the first information is used by the second terminal device to determine whether to agree to obtain the distance and/or the angle between the first terminal device and the second terminal device; and
a receiving unit, configured to receive a first response message from the second terminal device, wherein the first response message comprises first indication information, the first indication information indicates a determining result of the second terminal device, and the determining result comprises whether obtaining of the distance and/or the angle between the first terminal device and the second terminal device is agreed on.

33. The apparatus according to claim 32, wherein before that a sending unit sends a first request message to a second terminal device, the receiving unit is further configured to receive a second request message from a first device, wherein the second request message is used to request to measure the distance and/or the angle between the communication apparatus and the second terminal device, and the second request message comprises the first information.

34. The apparatus according to claim 32 or 33, wherein the first information comprises an identifier of the first device and/or purpose information indicating a measurement result use purpose.

35. The apparatus according to any one of claims 32 to 34, wherein when the determining result is that the second terminal device disagrees to obtain the distance and/or the angle between the first terminal device and the second terminal device, the first response message further comprises a cause value, and the cause value indicates a cause why the second terminal device disagrees to obtain the distance and/or the angle between the first terminal device and the second terminal device.

36. The apparatus according to claim 35, wherein the cause value indicates that the second terminal device disagrees to send a measurement result to the first device, and/or the cause value indicates that the second terminal device disagrees on a use purpose of the measurement result.

37. The apparatus according to any one of claims 32 to 36, wherein when the determining result is that the second terminal device agrees to obtain the distance and/or the angle between the first terminal device and the second terminal device, the first response message further comprises second indication information, and the second indication information indicates that a measurement result calculating device is the communication apparatus or the second terminal device; and the apparatus further comprises a processing unit, configured to determine, according to a privacy protection policy of the communication apparatus, whether to agree on content indicated by the second indication information.

38. The apparatus according to claim 37, wherein when the second indication information indicates that the second terminal device is the measurement result calculating device, that the processing unit determines, according to a privacy protection policy of the communication apparatus, whether to agree on content indicated by the second indication information comprises: when the privacy protection policy of the communication apparatus is that the second terminal device is allowed to obtain a measurement result, the processing unit determines to agree that the second terminal device is used as the measurement result calculating device; or when the privacy protection policy of the communication apparatus is that the second terminal device is not allowed to obtain a measurement result, the processing unit determines to disagree that the second terminal device is used as the measurement result calculating device.

39. The apparatus according to claim 37 or 38, wherein the second indication information comprises role information indicating a measurement role of the second terminal device.

40. The apparatus according to claim 39, wherein when the role information indicates that the second terminal device is a reference terminal device, that the processing unit determines, according to a privacy protection policy of the communication apparatus, whether to agree on content indicated by the second indication information comprises: when the privacy protection policy of the communication apparatus is that the second terminal device is allowed to obtain a measurement result, the processing unit determines to agree that the second terminal device is used as the reference terminal device; or when the privacy protection policy of the communication apparatus is that the second terminal device is not allowed to obtain a measurement result, the processing unit determines to disagree that the second terminal device is used as the reference terminal device.

41. The apparatus according to any one of claims 37 to 40, wherein the sending unit is further configured to send second information to the second terminal device, wherein the second information indicates whether the content indicated by the second indication information is agreed on.

42. The apparatus according to any one of claims 32 to 41, wherein when the communication apparatus obtains a measurement result by performing measurement, the processing unit determines not to send the measurement result to the second terminal device, and the sending unit is further configured to send a second response message to the first device, wherein the second response message comprises the measurement result.

43. The apparatus according to any one of claims 32 to 42, wherein when the second terminal device obtains a measurement result by performing measurement, the receiving unit is further configured to receive third indication information from the second terminal device, wherein the third indication information indicates that the measurement result is successfully sent or fails to be sent; and
the sending unit is further configured to send a second response message to the first device, wherein the second response message comprises fourth indication information, and the fourth indication information indicates that the measurement succeeds or fails.

44. A communication apparatus, wherein the apparatus comprises:
a receiving unit, configured to receive a first request message from a first terminal device, wherein the first request message is used to request to obtain a distance and/or an angle between the first terminal device and the communication apparatus, and the first request message comprises first information;
a processing unit, configured to determine, based on the first information, whether to agree to obtain the distance and/or the angle between the first terminal device and the second terminal device; and
a sending unit, configured to send a first response message to the first terminal device, wherein the first response message comprises first indication information, the first indication information indicates a determining result of the communication apparatus, and the determining result comprises whether obtaining of the distance and/or the angle between the first terminal device and the communication apparatus is agreed on.

45. The apparatus according to claim 44, wherein the first information comprises an identifier of a first device and/or purpose information indicating a measurement result use purpose.

46. The apparatus according to claim 45, wherein when the first information comprises the identifier of the first device, that the second terminal device determines, based on the first information, whether to agree to obtain the distance and/or the angle between the first terminal device and the second terminal device comprises: the second terminal device determines, based on the identifier of the first device and a local policy, whether to agree to obtain the distance and/or the angle between the first terminal device and the second terminal device; and if the local policy indicates that a measurement result is allowed to be sent to the first device, the second terminal device agrees to obtain the distance and/or the angle between the first terminal device and the second terminal device; or if the local policy indicates that a measurement result is not allowed to be sent to the first device, the second terminal device disagrees to obtain the distance and/or the angle between the first terminal device and the second terminal device.

47. The apparatus according to claim 45 or 46, wherein when the first information comprises the purpose information, that the second terminal device determines, based on the first information, whether to agree to obtain the distance and/or the angle between the first terminal device and the second terminal device comprises: the second terminal device determines, based on the purpose information and a local policy, whether to agree to obtain the distance and/or the angle between the first terminal device and the second terminal device; and if the local policy indicates that a measurement result is allowed to be used for the measurement result use purpose indicated by the purpose information, the second terminal device agrees to obtain the distance and/or the angle between the first terminal device and the second terminal device; or if the local policy indicates that a measurement result is not allowed to be used for the measurement result use purpose indicated by the purpose information, the second terminal device disagrees to obtain the distance and/or the angle between the first terminal device and the second terminal device.

48. The apparatus according to any one of claims 44 to 47, wherein when the communication apparatus agrees to obtain the distance and/or the angle between the first terminal device and the second terminal device, the processing unit is further configured to determine the second indication information according to a privacy protection policy of the communication apparatus, wherein the second indication information indicates that a measurement result calculating device is the first terminal device or the communication apparatus; and
the first response message further comprises the second indication information.

49. The apparatus according to claim 48, wherein when the privacy protection policy of the communication apparatus is that the first terminal device is allowed to obtain a measurement result, the second indication information indicates that the measurement result calculating device is the first terminal device; or
when the privacy protection policy of the communication apparatus is that the first terminal device is not allowed to obtain a measurement result, the second indication information indicates that the measurement result calculating device is the communication apparatus.

50. The apparatus according to claim 48 or 49, wherein the second indication information comprises role information indicating a measurement role of the communication apparatus.

51. The apparatus according to claim 50, wherein when the privacy protection policy of the communication apparatus is that the first terminal device is allowed to obtain a measurement result, the role information indicates that the measurement role of the communication apparatus is a reference terminal device or a target terminal device; or
when the privacy protection policy of the communication apparatus is that the first terminal device is not allowed to obtain a measurement result, the role information indicates that the measurement role of the communication apparatus is a reference terminal device.

52. The apparatus according to any one of claims 48 to 51, wherein the receiving unit is further configured to receive second information from the first terminal device, wherein the second information indicates whether the first terminal device accepts content indicated by the second indication information.

53. The apparatus according to any one of claims 44 to 52, wherein when the communication apparatus obtains a measurement result by performing measurement, the processing unit determines not to send the measurement result to the first terminal device, and the sending unit is configured to send the measurement result or an encrypted measurement result to the first device, wherein the encrypted measurement result is encrypted based on a first key, and the first key is a key shared by the communication apparatus and the first device.

54. The apparatus according to claim 53, wherein before that the sending unit sends the measurement result, the sending unit is further configured to send a first request message to the first device, wherein the first request message is used to request to establish a secure connection, and the secure connection is used to transmit the measurement result.

55. The apparatus according to claim 54, wherein before that the sending unit sends an encrypted measurement result, the processing unit is further configured to obtain the first key.

56. The apparatus according to any one of claims 44 to 55, wherein when the communication apparatus disagrees to obtain the distance and/or the angle between the first terminal device and the second terminal device, the first response message further comprises a cause value, and the cause value indicates a cause why the communication apparatus disagrees to obtain the distance and/or the angle between the first terminal device and the second terminal device.

57. The apparatus according to claim 56, wherein the cause value indicates that the communication apparatus disagrees to send a measurement result to the first device, and/or the cause value indicates that the communication apparatus disagrees on a use purpose of the measurement result.

58. A communication apparatus, wherein the apparatus comprises:
a sending unit, configured to send a second request message to a first terminal device, wherein the second request message is used to request to measure a distance and/or an angle between the first terminal device and a second terminal device, the second request message comprises first information, and the first information is used by the second terminal device to determine whether to agree on the measurement requested by using the second request message; and
a receiving unit, configured to receive at least one of the following information:
a measurement result, an encrypted measurement result, or fourth indication information, wherein the fourth indication information indicates that the measurement succeeds or fails, wherein the encrypted measurement result is encrypted based on a first key, and the first key is a key shared by the second terminal device and the communication apparatus.

59. The apparatus according to claim 58, wherein the first information comprises an identifier of the communication apparatus and/or purpose information indicating a measurement result use purpose.

60. The apparatus according to claim 58 or 59, wherein that a receiving unit receives a measurement result comprises:
the receiving unit receives the measurement result from the second terminal device; and
the receiving unit is further configured to receive a first request from the second terminal device, wherein the first request is used to request to establish a secure connection, and the secure connection is used to transmit the measurement result.

61. The apparatus according to claim 58 or 59, wherein that a receiving unit receives an encrypted measurement result comprises:
the receiving unit receives the encrypted measurement result from the second terminal device; and
the apparatus further comprises a processing unit, configured to obtain the first key.

62. A communication apparatus, comprising:
a memory, configured to store a computer program; and
a processor, configured to execute the computer program stored in the memory, to enable the communication apparatus to perform the method according to any one of claims 1 to 30.

63. A computer-readable storage medium, wherein the computer-readable storage medium stores computer instructions; and when the computer instructions are run on a computer, the method according to any one of claims 1 to 30 is performed.

64. A computer program product, wherein the computer program product comprises instructions for performing the method according to any one of claims 1 to 30.
